(19) Europäisches Patentamt
European Patent Office
Office européen des brevets

(11) EP 2 368 616 B1

(12) **EUROPEAN PATENT SPECIFICATION**

(45) Date of publication and mention of the grant of the patent:
**12.12.2012 Bulletin 2012/50**

(51) Int Cl.:
***B01D 46/00*** *(2006.01)*

(21) Application number: **11001367.9**

(22) Date of filing: **18.02.2011**

(54) **Air cleaner assembly and method**

Luftreinigeranordnung und -verfahren

Ensemble de purificateur d'air et procédé

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.02.2010 US 305853 P**

(43) Date of publication of application:
**28.09.2011 Bulletin 2011/39**

(73) Proprietor: **Hakko Corporation**
**Osaka-shi, Osaka 556-0024 (JP)**

(72) Inventors:
- **Matsuzaki, Kenji**
**Naniwa-ku**
**Osaka-shi**
**Osaka 556-0024**
**(JP)**
- **Takeuchi, Hitoshi**
**Naniwa-ku**
**Osaka-shi**
**Osaka 556-0024**
**(JP)**
- **Mochizuki, Toshikazu**
**Naniwa-ku**
**Osaka-shi**
**Osaka 556-0024**
**(JP)**

(74) Representative: **Müller-Boré & Partner Patentanwälte**
**Grafinger Straße 2**
**81671 München (DE)**

(56) References cited:
**WO-A1-02/26349**
**WO-A2-97/47928**
**DE-U1- 20 017 210**
**US-A- 3 936 284**
**US-A- 6 036 757**
**US-A1- 2007 012 181**
**US-A1- 2007 039 472**
**US-A1- 2007 277 672**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 368 616 B1

## Description

## FIELD OF THE INVENTION

This invention relates generally to an air cleaner and, more particularly, to replacement of an air filter in an air cleaner.

## BACKGROUND

Various air cleaners suction air through multiple filters such as Japanese Patent Number 2755200. The prior art is provided with a pre-filter at an intake side of a cleaner body and a main filter inside of the body. Further, this air cleaner defines the life of the pre-filter which has the shorter life than that of the main filter and provides an alert signal for replacing the pre-filter based solely on a predetermined time interval which has elapsed. The alert signal occurs regardless of whether the filters are actually clogged or degraded. This is because filters will clog at varying times depending on the amount of airborne particulates in the room. Other air cleaners with multiple filters use a device comprising a pressure gauge downstream of the filters which floats an indicator element to signal the need for replacement.

Document US 6 036 757 discloses a portable air purifier including housing defining an air inlet, an air outlet and an air flow passage extending therebetween; a filter mechanism disposed to filter air circulating through the flow passage; and a fan retained by the housing and activatable to draw air through the air inlet, move air through the flow passage and filter mechanism and discharge air through the air outlet.

Document US 2007/0277672 A1 discloses a timer that starts a time cycle when the filter is placed into a housing.

Document US 2007/0012181 A1 discloses a control system for controlling blower speed as a function of separately determined smoke and dust concentrations.

Document WO 02/26 349 A1 discloses an air purifier comprising a pre-filter and a main filter which are removably supported within an air filtration chamber for entrapping particulates having a size of 0.3 microns and greater.

Document WO 97/47928 A2 discloses an air treatment system having a generally planar filter which is contained within an outlet chamber and is spaced apart from the rear wall of the housing to define a plenum.

## SUMMARY OF THE INVENTION

Thus, according to an aspect, it is a problem to increase the utilization factor of the filters. This problem is solved by an air cleaner assembly having the features disclosed in claim 1 and the method disclosed in claim 15. Preferred embodiments are defined in the dependent claims.

Briefly and in general terms, the present invention is directed to an air cleaner assembly and a method of operating an air cleaner assembly.

In aspects of the present invention, an air cleaner assembly is provided with a housing, a fan accommodated in the housing and configured to draw air into the housing, a pre-filter disposed in an air passage of the housing, and a main filter in the air passage and disposed between the pre-filter and the fan. Display means is disposed to indicate warnings for replacement for each filter individually. Also control means is disposed to control the display.

In one aspect of the present invention, the control means is adapted to control the display means so that the display means individually indicates signals for replacement of the pre-filter when the timing for the pre-filter replacement is detected and individually indicates signals for replacement of the main filter when the timing for the main filter replacement is detected.

In one particularly preferable aspect of the present invention, the control means is adapted to control the display means to indicate that the pre-filter should be replaced when the control means detects clogging of the pre-filter to have occurred or the end of useful life of the pre-filter to have occurred. Also the control means is adapted to control the display means to indicate that the main filter should be replaced when the control means detects a predetermined condition under which the number of times that the clogging of the pre-filter has been detected and the number of times that the end of useful life of the pre-filter has been detected meet with certain relationship.

In this preferred aspect, it is possible to estimate relatively accurate occurrences of end-of-useful life of the main filter based on the cumulative detection of clogging deterioration of pre-filter without any special flow meters or current meters. The inventors found the relationship between the end-of-useful life of the main filter and the clogging deterioration of pre-filter through the following findings.

First, as a result of whole hearted study, the inventors found correlative relationship between number of clogging of the pre-filter and the end of useful life of the main filter. In a state, where the pre-filter has been replaced more than certain times, the main filter also deteriorated to be replaced. Therefore, the main filter should be replaced when the number of times that clogging of the pre-filter has been detected exceeds certain limit value. Further, at early stages of use, it can be detected relatively accurate occurrences of the clogging of the pre-filter according to motor speed for driving the fan. Consequently, this aspect of the present invention is to take account of the number of times that the clogging of the pre-filter has occurred in order to assume or estimate the end-of-life of the main filter.

Next, the inventors of the present invention focused the relationship between the clogging and end-of-life of pre-filter. A soldering area may have many soldering work operations, which means there is more smoke in the air, or few work operations, which means there is less smoke in the air. Therefore, the pre-filter may be replaced before it clogs due to the end of life occurrences. However, main filter also deteriorates under the driving state where the pre-filter does not clog yet. As a parameter, this aspect of the present invention uses the number of times that the end-of-life of pre-filter is detected, so that the assumption or estimate can be accurate.

In a preferred embodiment, the control means processes the following steps:

(1) counting a number ("N") of times that clogging of the pre-filter has been detected;
(2) counting a number ("M") of times that end of useful life of the pre-filter has been detected; and
(3) calculating a counting value ("Z") in accordance with following formula:

$$Z = N + C \times M \qquad (1)$$

where ("C") is a correction factor. Also the control means controls the display means to indicate that the main filter should be replaced when the count value ("Z") exceeds a main filter limit. In this aspect, it is possible to assume individually the need for replacement of each filter according to the formula (1), so that assembly accurately signals to the user as to which filter should be replaced. In an embodiment according to the inventors of the present invention, it is confirmed that the end-of-useful life of the main filter will occur when Z=10. In one example conducted by the inventors, the correction factor or coefficient ("C") is preferably 0.5 when the count value ("Z") is 10. It is matter of course that the correction factor C can be various values as specifically described in the following embodiments.

In another aspect of the present invention, the main filter contains a fuse. The control means causes the fuse to blow when the count value ("Z") exceeds the main filter limit. This aspect enables the user of assembly to reliably realize the occurrences of the end of useful life of the main filter.

In another aspect of the present invention, the main filter is of an absorption type, which, when new, traps over at least 98% of airborne particles of 0.3 $\mu$m in size at rated wind velocity. The pre-filter, when new, traps over at least 65% of airborne particles of 0.3 $\mu$m in size at rated wind velocity. The count value ("Z") is preferably 10. The correction factor ("C") is preferably 0.5. In this aspect, the estimate of end of useful life of the main filter can more be accurate.

In another aspect of the present invention, the main filter is provided with a fuse which is adapted to be blown by the control means. In this aspect, the user enables to realize if the filter is to be replaced as the fuse is blown when the device detects certain condition.

In another aspect of the present invention, the control means is configured to detect the end of useful life of the main filter and blow the fuse when end of useful life of the main filter is detected.

In another aspect of the present invention, the assembly is further provided with a sensor that detects motor speed for driving the fan, and means for memorizing a motor speed limit corresponding to the clogging of the pre-filter. The control means is further configured to compare the motor speed detected by the sensor with the motor speed limit memorized in the means for judgment as to whether the pre-filter is deteriorated. The control means controls the display means to indicate that the pre-filter should be replaced when the control means determines that the clogging of pre-filter is detected as the motor speed exceeds the motor speed limit. In this aspect, the motor speed limit is stored in the memory means for motor speed limit and the motor speed to be detected is compared against the motor speed limit. This enables to assume the clogging of the pre-filter accurately and indicate the need for replacement at appropriate timing. That is, there is a phenomenon in which, when the pre-filter has clogged, an increase in motor speed occurs naturally due to reduce in air mass which moves downstream from the filters. Utilizing the phenomenon with the motor speed limit which is determined according to experiments or other suitable method, the clogging of the pre-filter can be estimated. The motor speed is preferably the rotation rate of driving device (motor) for the fan. Because the rotation rate of the motor to the fan stands at substantially 1:1, fan speed can also be used when it is available.

In another aspect of the present invention, the assembly is further provided with means for memorizing a pre-filter operating time limit corresponding to the end of useful life occurrences of the pre-filter. The control means is further configured to detect a pre-filter cumulative operating time, and control the display means to indicate that the pre-filter should be replaced when the control means determines that the end of useful life of the pre-filter is detected as the pre-filter cumulative operating time exceeds the pre-filter operating time limit. In this aspect, the signals for replacement can be indicated at preferable timing by assuming the end of useful life of the pre-filter by means of the pre-filter operating time limit, which is determined by experiments or other method, stored in the means for memorizing the time limit and the comparison of the cumulative operating time against the time limit.

In another aspect of the present invention, the control means is configured to detect the pre-filter by a reset operation of a pre-reset switch which is adapted, when the driving mode is changed to a reset mode, to reset the pre-filter cumulative operating time detected by the means for detecting the pre-filter cumulative operating time. In this aspect, the pre-filter cumulative operating time can be reset at preferable timing by counting the accurate cumulative operating time for every pre-filter.

In another aspect of the present invention, means for detecting pre-filter may be provided with the control means. The control means detects a pre-filter cumulative operating time during which the means for detecting pre-filter detects the same pre-filter, and controls the display means to indicate the need for replacement of the pre-filter when the pre-filter cumulative operating time exceeds the pre-filter operating time limit.

In another aspect of the present invention, the control means contains nonvolatile memory means for memorizing a pre-filter state flag of Boolean of which values indicate whether replacement of the pre-filter is needed. The control means sets the pre-filter state flag memorized in the memory means to the value "NEED FOR REPLACEMENT" when one of the clogging and the end of useful life occurrences of the pre-filter is detected, and the control means sets the pre-filter state flag to the value "NEED NOT FOR REPLACEMENT" when the pre-reset switch is actuated. In this aspect, the pre-filter status flag is stored in the nonvolatile memory means for pre-filter status flag. Therefore, once the control means detects the state that the pre-filter should be replaced(either due to clogging or end of useful life), the control means can recall, even after the power switch is turned off and on, that the existing pre-filter has reached a condition for replacement and that the pre-filter still needs to be replaced. As is widely well known, type Boolean contains exactly two values: two truth values, to be specific, denoted by the literals "TRUE" and "FALSE", respectively. Null may by used for "FALSE". One of these two values may be used for denoting "NEED FOR REPLACEMENT" and the other may be used for "NEED NOT FOR REPLACEMENT".

Yet another aspect of the present invention, the assembly is further provided with means for detecting the main filter accommodated in the housing, and means for memorizing a main filter operating time limit corresponding to the end of useful life occurrences of the main filter. In one particular embodiment, the control means is further configured to detect a main filter cumulative operating time for judgment as to whether the main filter is deteriorated, and control the display means to indicate that main filter should be replaced when the control means determines that the end of life of the main filter is detected as the main filter cumulative operating time exceeds the main filter operating time limit. In this aspect, the signals for replacement can be indicated at preferable timing by assuming the end of useful life of the main filter by means of the main filter operating time limit, which is determined by experiments or other method, stored in the means for memorizing the time limit and the comparison of the cumulative operating time against the time limit.

In another aspect of the present invention, the means for detecting the main filter is a main filter reset switch configured to be actuated when the main filter is removed from and installed into the housing. In this aspect, the control means enables to count accurate cumulative operating time for each main filter and rest it at appropriate timing.

In another aspect of the present invention, when the main filter reset switch is actuated, the control means controls the display means to indicate that the main filter need not be replaced.

In another aspect of the present invention, the control means is provided with nonvolatile memory means for memorizing a main filter state flag of Boolean of which values indicate whether replacement of the main filter is needed. Also the control means is further configured to set the main filter state flag to the value "NEED FOR REPLACEMENT" when the end of useful life occurrences of the main filter is detected. The control means is further configured to set the main filter state flag to the value "NEED NOT FOR REPLACEMENT" when the main filter reset switch is actuated. The display means is configured to indicate that the main filter should be replaced when the value of the main filter state flag is set to "NEED FOR REPLACEMENT". Also the display means is configured to indicate that the main filter need not be replaced when the value of the main filter state flag is set to "NEED NOT FOR REPLACEMENT." In this aspect, the main filter status flag is stored in the nonvolatile memory means for main filter status flag. Therefore, once the control means detects the state that the main filter should be replaced (either due to clogging or end of useful life), the control means can recall, even after the power switch is turned off and on, that the existing main filter has reached a condition for replacement and that the main filter still needs to be replaced. As is widely well known, type Boolean contains exactly two values: two truth values, to be specific, denoted by the literals "TRUE" and "FALSE", respectively. Null may by used for "FALSE." One of these two values may be used for denoting "NEED FOR REPLACEMENT" and the other may be used for "NEED NOT FOR REPLACEMENT."

In another preferable aspect of the present invention, the pre-filter is of an absorption type. The main filter, disposed downstream side from the pre-filter, is of an absorption type having higher absorption capacity and longer useful life than the pre-filter.

The absorption type filter means filter having a mat of randomly arranged fibers which trap particles by interception, impaction, and sedimentation. Further, it can trap by Brownian movement of particles or static attraction due to a difference in electric potential between particles and filter fibers. The mechanisms of interception, impaction, sedimentation, Brownian movement of particles, and static attraction are known in the art and need not be discussed herein.

Another aspect of the present invention is a method of operating the air cleaner assembly.

One preferable method comprises: a step of counting a number ("N") of times that clogging of the pre-filter has been detected; a step of counting a number ("M") of times that end of useful life of the pre-filter has been detected; a step of calculating a counting value ("Z") in accordance with following formula:

$$Z = N + C \times M \qquad (1)$$

where ("C") is a correction factor; and a step of controlling the display means to indicate that the main filter should be replaced when the count value ("Z") exceeds a main filter limit.

In this preferred aspect, it is possible to estimate relatively accurate occurrences of end-of-useful life of the main filter based on the cumulative detection of clogging deterioration of pre-filter without any special flow meters or current meters.

In another preferable method, the step of counting the ("N") is including a step of detecting a motor speed ("S") for driving the fan, and a step of determining the clogging of the pre-filter has occurred when the detected motor speed ("S") exceeds a predetermined rotation limit.

In another preferable method, the step of counting the ("M") includes a step of detecting a pre-filter cumulative operating time during which the same pre-filter has been in use within the housing with the fan running, and a step of determining the end of useful life occurrences of the pre-filter when the pre-filter cumulative operating time exceeds a predetermined operating time limit.

Another preferable method further comprises a step of when the main filter reset switch is actuated, the control means controls the display means to indicate that the main filter need not be replaced.

Another preferable method further comprises a step of blowing a fuse on the main filter when the count value ("Z") (=N+C×M) exceeds the main filter limit.

Another preferable method further comprises a step of detecting the presence of the main filter and blow fuse when a main filter cumulative operating time exceeds a main filter operating time limit.

Another preferable method further comprises a step of controlling the display means to indicate that the main filter should be replaced when a main filter cumulative operating time during which the same main filter has been in use within the housing with the fan running exceeds a main filter operating time limit.

The features and advantages of the invention will be more readily understood from the following detailed description which should be read in conjunction with the accompanying drawings.

## BRIEF DESCRIPTION OF THE DRAWINGS

FIG. 1 is a perspective view showing the top and front of an air cleaner assembly connected by a suction duct to a hood for collecting fumes and airborne particles.

FIG. 2 is a perspective view showing the bottom and rear of the air cleaner assembly of FIG. 1.

FIG. 3 is a perspective view of the air cleaner of FIG. 1, showing a lid opened to allow removal of a pre-filter and a main filter which are normally contained beneath the lid.

FIG. 4 is a plan view of a control panel located on the front of the air cleaner assembly of FIG. 1.

FIG. 5 is block diagram showing indicators and switches on the control panel of FIG. 4 connected to a control circuit of the air cleaner assembly.

FIG. 6 is a diagram showing the legend of FIGS. 7 and 8.

FIGS. 7 and 8 are transition diagrams showing the state of various parameters during the course of operation of the air cleaner assembly.

FIG. 9 is a chart of test results showing degradation in air flow through the air cleaner as smoke particles are suctioned by the air cleaner.

FIG. 10 is a chart of test results showing degradation in the ability of the air cleaner to trap particles.

FIG. 11 is a perspective view of a main filter having a fuse which is blown by the control circuit of the air cleaner assembly.

FIG. 12 is a schematic diagram showing features associated with the fuse.

FIG. 13 is a diagram showing the legend of FIGS. 14 and 15.

FIGS. 14 and 15 are transition diagrams showing the state of various parameters during the course of operation of the air cleaner assembly when used with the main filter of FIGS. 11 and 12.

FIG. 16 is a diagram showing flow direction of an air stream through the air cleaner assembly.

## DETAILED DESCRIPTION OF THE INVENTION

(First embodiment)

Referring now in more detail to the exemplary drawings for purposes of illustrating embodiments of the invention, preferable examples are explained with numerals which designate relating elements shown in the drawings. There is shown in FIGS. 1-3 an air cleaner assembly 10 for extracting fumes from soldering operations. A housing 11 contains a removable pre-filter 12, a removable main filter 14, a motorized fan 16(see FIG.5), which is an assembly of a motor and a fan, and control circuit 17 (see FIG.5). The control circuit 17 may include a combination of electronic components, such as transistors, sensors for detecting motor speed, memory devices, programmable logic controllers, microcontrollers and/or microprocessors. A control panel 18 on a front side of the housing 11 includes switches and a visual display which allow a user to operate and maintain the proper function of the air cleaner assembly 10. A hinged lid 20 forming the top of the housing 11 can be pivoted open by the user by unlocking a latch 22. Opening the lid 20 allows the user to access the pre-filter 12 and the main filter 14 for replacement.

Referring to FIG.3, the pre-filter 12 is located upstream of the main filter 14 so as to keep relatively large airborne particles from getting into the main filter. This can lengthen the useful life of the main filter. The pre-filter can be made of polyester or glass fibers. Over time, the pre-filter 12 becomes clogged, which results in reduced air flow. As the pre-filter 12 becomes increasing clogged, the fan operates at a greater rotation rate. An increase in motor speed occurs naturally when less air mass moves downstream from the filters 12, 14 to the fan 16. As will be explained below, the control circuit 17 is configured to detect and/or estimate when the pre-filter 12 is overly clogged and to provide a signal to the user when the pre-filter should be replaced.

Since air (environment) conditions can vary greatly, detection solely by use time is not enough to detect filter clogging, and the revolutions of motor is needed especially for poor environment conditions. When the air has an unusually high amount of dust and particulates, filters will clog and deteriorate sooner than a predetermined time. Thus detection of filter clogging by a decrease in air flow is necessary. Measuring the air flow quantity and speed, as a means to detect filter clogging, requires a flow meter and a current meter. Detecting the revolutions of the motor, as a means to detect filter clogging, does not require a flow meter or a current meter, thereby reducing the number of components and the cost of the air cleaner assembly.

However, displaying a warning about the useful life of two different filters arranged sequentially is impossible to perform individually for each filter with the use of conventional technology relying solely on motor revolutions. The number of revolutions of the motor increases when either the pre-filter or main filter is clogged. Because the motor is located downstream from both the pre-filter and the main filter, it is impossible in the long run to detect, based solely on motor revolutions, as to which filter is clogged or deteriorated. At early stages of use, it can be assumed that a reduced number of motor revolutions is due to deterioration of the pre-filter only. As time passes, however, this assumption cannot be made, making it impossible to detect, solely by means of motor revolutions, which filter is deteriorated and to indicate individual warnings for each filter. The same problem arises with measuring the quantity of air flow to detect filter clogging and deterioration. Referring to FIG. 16, when only the pre-filter 12 is clogged or only the main filter 14 is clogged, the air flow is the same at point "A1" downstream of the pre-filter, at point "B1" downstream of the main filter, and at any other point in the air stream 15 within the air cleaner assembly. Thus, it is impossible to distinguish which filter is clogged solely by measuring air flow or motor revolutions.

In preferred embodiments, the main filter 14 is a high performance filter which prevents passing through more than 99.97% of particles sized 0.3 μm. In use, the main filter 14 is combined with the pre-filter 12 which has a lower absorption capacity than the main filter. The inventors found through their experiments that the useful life of the main filter expires according to the detected number of clogging and end-of-useful life occurrences ("N" and "M") after weighting with a correction factor ("C"). The letter N is the detected number of times clogging of the pre-filter according to motor revolutions. The letter M is the detected number of times end-of-useful life occurrences according to a cumulative operating time of the pre-filter. The main filter 14 is detected to have expired or deteriorated when a count value ("Z") derived by:

$$Z = N + C \times M \qquad (1)$$

exceeds a limit $Z_L$ as will be explained below.

The main filter 14 traps relatively fine airborne particles as compared to the pre-filter 12. The main filter can be a high efficiency particulate air (HEPA) filter having a mat of randomly arranged fibers which trap particles by interception, impaction, and sedimentation (or Brownian movement of particles). The mechanisms of interception, impaction, and sedimentation are known in the art and need not be discussed herein. Both the pre-filter 12 and main filter 14 can also trap particles by static attraction due to a difference in electric potential between particles and filter fibers. Over time, the main filter 14 becomes saturated and the trapping effectiveness of the main filter deteriorates as more and more particles are able to pass through. Under normal condition of use, the size of the particles trapped in the main filter is smaller than the diameter of fiber. Deterioration of the particle trapping capability of the main filter 14 does not necessary result in reduced air flow. As will be explained below, the control circuit 17 is configured to estimate when the trapping capability of the main filter 14 has unduly deteriorated and to provide a signal to the user that the main filter should be replaced.

In some embodiments the pre-filter 12, when new, traps about 65% of airborne particles of 0.3 μm in size or larger, and the main filter 14, when new, traps at least over 98% of airborne particles of 0.3 μm in size.

An air inlet 24 is formed through the hinged lid 20. A suction duct 26 can be connected to the air inlet 24 so that the hood 28 for correcting fumes can be suctioned away from a remote location. When the fan 16 is operated, air is drawn into the air inlet 24. Once inside the housing 11, the air passes through the pre-filter 12 which is located above the main filter 14. After the pre-filter 12, the air passes downstream through the main filter 14 which is located above a separation wall 30.

As shown in FIG. 3, the separation wall 30 has a hole 30a into which the air passing through the main filter 14 is drawn by the fan 16. The separation wall 30 divides the interior space of the housing 11 into a top chamber and a bottom chamber. The top chamber contains the pre-filter 12 and main filter 14, and the bottom chamber contains the fan 16 which is integral with the motor, and the control circuit 17.

A main filter reset switch 32 is mounted on the separation wall 30. The main filter reset switch 32 is a pushbutton-type switch having a spring-loaded button 32a which protrudes out from the separation wall 30 and into the space normally occupied by the main filter 14. The button 32a has an IN position and an OUT position. The button 32a is pushed down to the IN position by the main filter 14 when the main filter 14 is placed in the to top chamber of the housing 11, which then allows the control circuit 17 to detect the presence of the main filter 14. The button 32a springs up to the OUT position when the main filter 14 is removed from the top chamber, which then allows the control circuit 17 to detect the absence of the main filter 14.

Referring back to FIG. 2, air from the bottom chamber is forced out of exhaust vents 34 located beneath the bottom chamber.

Referring now to FIG. 4, the control panel 18 includes three indicator lights 36, 38, and 40, a rocker-type power switch 42 for turning the air cleaner assembly on and off, and a rotary-type flow switch 44 to allow the user to select the air flow rate for suction. The indicator lights 36, 38, and 40 can be light emitting diodes, an incandescent lamp, or other conventional visual indicator. The first indicator light, referred to as a pre-filter status light 36, illuminates or flashes with orange light when it is detected by control circuit 17 that the pre-filter 12 should be replaced. The second indicator light, referred to as a main filter status light 38, illuminates or flashes with red light when it is detected by the control circuit 17 that the main filter 14 should be replaced. The third indicator light, referred to as a power status light 40, illuminates or flashes with green light when the power switch 42 is moved from the OFF position to the ON position. The flow switch 44 is movable to and from three different flow positions and a RESET position, and has an electrical terminal for each of the four positions. The electrical terminals are alternatively connected with a common terminal by rotational operations of a dial 44a. The control circuit 17 switches one of HIGH-, MEDIUM-, and LOW-driving modes and RESET-mode according to the electrical terminal which is connected to the common terminal. The control circuit 17 controls the motor fan 16 to rotate according to the driving mode.

At the high flow position, or HIGH-driving mode, the air cleaner assembly 10 provides the highest level of suction among the three flow settings. At the medium flow position, or MEDIUM-driving mode, the air cleaner assembly 10 provides an intermediate level. At the low flow position, or LOW-driving mode, the air cleaner assembly 10 provides the lowest level of suction among the three flow settings.

When flow switch 44 is at the RESET position, or RESET-mode, the control circuit 17 stops the fan 16 to allow the user replace pre-filter 12. When the user moves the flow switch 44 to the RESET position, the control circuit 17 detects that the pre-filter 12 has been replaced and, as explained below, resets parameters associated with detecting clogging of the pre-filter. The flow switch 44 having the RESET position can be referred to as a pre-filter reset switch which resets the pre-filter cumulative operating time $T_P$.

As shown in FIG. 5, the control circuit 17 is operatively connected to and controls the three indicator lights 36, 38, 40 on the control panel 18. The control circuit 17 is also operatively connected to the flow switch 44, the main filter reset switch 32, and a power supply printed circuit board 48 that provides 40 volts to the control circuit 17.

In some embodiments, air flow rate for suction at the various flow switch 44 settings are shown in TABLE 1.

TABLE 1

| Flow Switch Position (flow setting) | Air Flow Rate, $m^3$/min | Motor speed: rpm | | |
|---|---|---|---|---|
| | | Pre-filter New (normal motor speed without clogging) | Primary Pre-filter Replacement Condition | |
| | | | Rotation Rate Limit for 1st Warning to Replace Pre-filter ($S_{L1}$) | Rotation Rate Limit for 2nd Warning to Replace Pre-filter ($S_{L2}$) |
| Low | 2.8 | 3400 | 3710 | 3800 |
| Medium | 3.7 | 4350 | 4750 | 4950 |
| High | 4.7 | 5050 | 5450 | 5700 |

Over time, it becomes more difficult to pass air through the air cleaner due to clogging. As less air mass passes downstream from the pre-filter and main filter to the fan, the motor speed (i.e., rotation rate) increases. The increase in motor speed occurs naturally, possibly due to a decrease in air load on the fan 16, and the control circuit 17 does not actively decrease the motor speed in response to the decreased air flow. Thus, the control circuit 17 only needs to detect motor speed to detect clogging. The control circuit does not need to have any sensors for directly measuring air flow rate to detect clogging.

For some embodiments, TABLE 1 shows the various speeds at which the control circuit 17 operates the fan 16. When the pre-filter 12 is new and no clogging has occurred, the fan 16 is operated at or about the motor speed values under the "Pre-filter New" column.

To detect when the user should replace the pre-filter 12, the control circuit 17 monitors two parameters: the motor speed ("S"), and fan operation time ("$T_P$") elapsed since the previous replacement of the pre-filter 12. The control circuit 17 compares these two parameters against limit values so as to detect any of two pre-filter replacement conditions. The primary pre-filter replacement condition corresponds to detection of clogging based on S. The secondary pre-filter replacement condition corresponds to an estimate of end of useful life based on $T_P$.

To detect when the user should replace the main filter 14, the control circuit 17 keeps track of three parameters: the number of times ("N") the pre-filter is detected to have clogged due to the primary pre-filter replacement condition based on ("S"); the number of times ("M") the pre-filter is detected to have deteriorated due to the secondary pre-filter replacement condition based on ("$T_P$"); and the fan operation time ("$T_M$") elapsed since the previous replacement of the main filter.

The control circuit 17 detects two replacement conditions for the main filter 14 according to these parameters ("S" "M" and "$T_M$.") The primary main filter replacement condition corresponds to an estimate of end of useful life based on Z. The secondary main filter replacement condition corresponds to an estimate of end of useful life based on $T_M$.

To detect the primary main filter replacement condition, the control circuit 17 calculates a parameter ("Z") as a function of N and M as explained in formula (1). To detect the secondary main filter replacement condition, the control circuit 17 detects the fan operation time ("$T_M$") elapsed since the previous replacement of the main filter. The control circuit 17 then compares Z and $T_M$ against limit values ("$Z_L$") and ("$T_{ML}$") so as to detect any of two main filter replacement conditions.

Operation of the air cleaner assembly 10 of some embodiments will now be described with reference to FIGS. 6 to 8. FIG. 7, which relates to replacing the pre-filter 12, is discussed first.

At block 50, the user moves the power switch 42 (FIG. 4) from the OFF position to the ON position, which causes 40 volts to be supplied to the control circuit 17 and causes the power status light 40 to illuminate.

The fan 16 does not rotate when the flow switch 44 is at the RESET position. If the main filter reset switch 32 (FIG. 3) is at the OUT position, the control circuit 17 illuminates the main filter status light 38, detects that the main filter 14 is removed from the housing 11, and does not provide power to the fan 16 for rotation, as shown in block 54.

On the contrary, if the main filter reset switch 32 (FIG. 3) is at the IN position, the control circuit 17 detects that the main filter 14 is present in the housing 11 and causes the fan 16 to rotate at a speed according to the position of the flow switch 44, as shown in block 52. At this timing, the control circuit 17 starts to update (or cumulate) the pre- and main filter cumulative operating times $T_P$ and $T_M$.

In some instances, degradation in the ability of the pre-filter 12 to trap particles is not accompanied by reduced air flow through the pre-filter 12. As shown in block 53, which is transition from block 52, the control circuit 17 detects the cumulative time during which the same pre-filter 12 has been in use within the housing 11 with the fan 16 running. The cumulative time is referred to as the pre-filter cumulative operating time ("$T_P$"). The control circuit 17 periodically saves and/or updates $T_P$ in the memory device at regular intervals, such as every 1 minute or every 10 minutes. After the power switch 42 (FIG. 4) is turned off and on, the control circuit 17 uses the $T_P$ stored previously in memory as the basis for updating.

At block 53, both the pre- and main filter state flags are NULL if the initial state is maintained. That is, the flags indicate that the filters need not for replacement. Also the numbers ("N", "M") are sustained to the state before the power is turned ON at block 52 (which is 0 in initial state).

In some instances, degradation in the ability of the pre-filter 12 to trap particles is accompanied by reduced air flow through the pre-filter. Due to the reduced air flow, the fan 16 runs at a faster speed. As mentioned previously, the increase in motor speed occurs naturally, possibly due to a decrease in air load on the fan, and the control circuit 17 does not actively change the motor speed. The control circuit 17 uses the motor speed to indirectly detect whether there is sufficient clogging to warrant replacement of the pre-filter 12.

Still referring to FIG. 7, the control circuit 17 detects motor speed and compares the motor speed to various rotation rate limits. As shown at block 56, when the motor speed ("S") exceeds a first rotate rate limit ("$S_{L1}$"), for example 3710 rpm, the control circuit 17 determines that the clogging of pre-filter to have occurred. The control circuit 17 then continues to rotate the fan 16 but causes the pre-filter status light 36 to start flashing on and off at a relatively slow rate (first warning). Normally, the pre-filter status light 36 is not illuminated. The relatively slow flashing rate serves as a first warning signal to the user that the pre-filter 12 is clogged and should be replaced. The rate of flashing can be, for example, cycles of 500 msec illuminated followed by 500 msec not illuminated.

At block 56, the control circuit 17 increases by 1 a first counter variable ("N"), and sets a value of pre-filter status flag to the value which indicates "NEED FOR REPLACEMENT," thereby indicating that the pre-filter 12 should be replaced by the user. The first counter variable and the pre-filter status flag are stored in a memory device of the control circuit 17. The memory device is part of the control circuit 17 within the housing 11 and can be an electrically erasable read-only memory ($E^2$PROM) or other device. Preferably the device is nonvolatile memory or its equivalent. The incremental increase of the first counter variable ("N") allows the control circuit 17 to count the number of times that clogging has been detected to have occurred, which is then used to detect when the main filter 14 should be replaced. The pre-filter status flag can be a Boolean with two values. One of the values indicates one state that the pre-filter 12 should be replaced, and the other value (including Null) indicates another state that the pre-filter need not be replaced.

As shown at block 58, when the motor speed ("S") at block 56 exceeds a second rotation rate limit ("$S_{L2}$"), for example 3800 rpm, the control circuit 17 continues to rotate the fan 16 but causes the pre-filter status light 36 to start flashing on and off at a relatively fast rate (second warning). The relatively fast flashing rate at block 58 serves as a second warning signal to the user that the pre-filter 12 has become even more clogged and should be replaced. The rate of flashing can be, for example, cycles of 200 msec illuminated followed by 200 msec not illuminated.

The first and second rotation rate limits $S_{L1}$ and $S_{L2}$ used by the control circuit 17 depend upon the flow position of the flow switch 44. The control circuit 17 has stored within its memory device a matrix of rotation rate limits, there being a first and second rotation rate limit $S_{L1}$ and $S_{L2}$ for each flow setting. In some embodiments, the matrix of rotation rate limits $S_{L1}$ and $S_{L2}$ is as shown in TABLE 1.

It will be appreciated that any suitable value higher than the normal motor speed can be used for the first rotation rate limit $S_{L1}$, and any higher value can be used for the second rotation rate limit $S_{L2}$. Since the motor speed must be faster to achieve a higher air flow rate, suitable values for $S_{L1}$ will be progressively higher for the rotation rate limits for the low, medium and high flow settings, respectively. Similarly, suitable values for $S_{L2}$ will be progressively higher for the low, medium and high flow settings, respectively. Both $S_{L1}$ and $S_{L2}$ can be selected based in part on the size, blade shape, and construction type of the fan 16, efficiency of the fan motor, and other structural factors that affect air flow through the air cleaner assembly 10.

When, as shown in block 62 of FIG. 7, the pre-filter cumulative operating time $T_P$ exceeds a pre-filter operating time limit ("$T_{PL}$"), the control circuit 17 determines that the end of useful life of pre-filter 12 to have occurred. The control circuit 17 then continues to rotate the fan 16 but causes the pre-filter status light 36 to start flashing on and off, which serves as a warning signal to the user that the pre-filter 12 has deteriorated due to end of useful life.

Any suitable pre-filter operating time limit $T_{PL}$ may be used. The value for the pre-filter operating time limit that is actually used can be based on the construction type, size and capacity of the pre-filter 12 and/or the environmental conditions in which the air cleaner assembly 10 is intended or expected to be operated. A pre-filter operating time limit of 200 hours is determined to be suitable for a pre-filter used for manual soldering operations and configured to trap 65% of airborne particles of 0.3 $\mu$m in size or larger.

At block 62, the control circuit 17 increases by 1 a second counter variable ("M"), and sets the value of the pre-filter status flag to indicate "NEED FOR REPLACEMENT," indicating that the pre-filter 12 should be replaced by the user. The second counter variable and the pre-filter status flag are stored in the memory device of the control circuit 17. Incremental increase of the second counter variable ("M") allows the control circuit 17 to count the number of times that the end of useful life was detected to have occurred for the pre-filter 12, which is then used to detect when the main filter 14 should be replaced.

Because the pre-filter status flag is stored in memory, the control circuit 17 can recall, even after the power switch 42 is turned off and on, that the existing pre-filter 12 has reached a condition for replacement (either due to clogging or end of useful life) and that the pre-filter still needs to be replaced. Similarly, because the counter variables N and M are stored in memory, the control circuit 17 can keep track of the number of times the pre-filter 12 has been detected to have clogged or deteriorated even after the power switch 42 is turned off and on.

At block 56 or 62, the control circuit 17 compares count value Z against $Z_L$. If Z is smaller than $Z_L$, the control circuit 17 sustains the present mode. If, however, Z is equal or larger than $Z_L$, the driving state transits from block 56 or 62 to the block 64.

Upon seeing the flashing pre-filter status light 36 during driving state shown in block 56, 58, or 62, the user replaces the pre-filter 12 by moving the flow switch 44 to the RESET position, which connects the reset and common terminals of the flow switch 44. As a result, the driving state transits from block 56, 58, or 62 to block 60.

As shown in block 60 of FIG. 7, the RESET position causes the control circuit 17 to cut power to the fan 16 so that the fan stops rotating, and to make the pre-filter status light 36 stay on continuously. While the fan 16 has stopped, the user can open the lid 20 to replace the existing pre-filter with a new pre-filter. The RESET position also changes the value of pre-filter status flag from "NEED FOR REPLACEMENT" to "NEED NOT FOR REPLACEMENT," which allows the control circuit 17 to recall that the pre-filter has been replaced by the user. The RESET position does not set to zero counter variables N and M. Both N and M remain unchanged. After installing a new pre-filter 12 over the existing main filter 14 and closing the lid 20, the user can resume air suction by moving the flow switch 44 from the RESET position to one of the three flow positions. Also replacement of pre-filter does not affect the main filter cumulative operating time $T_M$.

FIG. 8, which relates to replacement of the main filter 14, will now be discussed. As indicated above, one condition for replacement of the main filter 14 is a function of counter variables N and M, which respectively correspond to the number of times the pre-filter 12 was detected deterioration due to clogging and end the useful life according to operating time. The control circuit 17 calculates a value Z according to the formula (1) or $Z=N+C\times M$. The control circuit 17 compares Z to a limit value, referred to as a main filter limit ("$Z_L$"), stored in the memory device of the control circuit.

As shown in block 64, a primary condition for replacement of the main filter 14 occurs when Z exceeds the main filter limit $Z_L$. Under this condition, the control circuit 17 continues to rotate the fan 16 but causes both the pre-filter status light 36 and the main filter status light 38 to start flashing on and off at a relatively slow rate. The dual flashing lights serve as a warning signal to the user that the pre-filter 12 and main filter 14 should be replaced to maintain maximum air cleaning effectiveness of the air cleaner assembly 10.

At block 64, the control circuit 17 changes a main filter status flag to the value which indicates "NEED FOR REPLACEMENT," indicating that the main filter 14 should be replaced by the user. The main filter status flag can be a can be a Boolean with two values. One of the values indicates one state that the main filter 14 should be replaced, and the other value (including Null) indicates another state that the main filter need not be replaced. The main filter status flag is used by the control circuit 17 to recall that the main filter 14 has degraded and that the main filter still needs to be replaced even after the power switch 42 is turned off and on.

The formula (1) or $Z=N+C\times M$ takes into account that the cleaning effectiveness of the existing main filter 14 depends in part upon the number of pre-filters which have been used since replacement of the previous main filter 14. Any suitable values for the correction factor C and the main filter limit $Z_L$ may be used. The value for C can be zero or non-zero. Preferably though not necessarily, C is a fraction between 0 and 1.0 so as to give greater weight to replacement of the pre-filter due to clogging compared to replacement of the pre-filter due to an operating time. The actual values for C and $Z_L$ can depend on the construction types of the pre-filter 12 and the main filter 14, the relative size and capacity of the pre-filter and the main filter, and the environmental conditions in which the air cleaner assembly 10 is intended or expected to be operated.

A soldering area may have many soldering work operations, which means there is more smoke in the air, or few work operations, which means there is less smoke in the air. Consider an example where detection according to motor revolutions has occurred eight times (N=8) and the main filter is deemed to have deteriorated when ($N+C\times M$) reaches ten. Without the correction factor (C=0), when detection according to operating time of the pre-filter has occurred twice (M=2), the life detection warning for the main filter is displayed (since the sum of N and M reached ten) even when, in reality, the main filter can continue to be used and need not be replaced. The inventors found that a correction factor C=0.5 is appropriate for typical soldering environments. Continuing the example, using C=0.5 means that detection according to operating time of the pre-filter can occur four times (M=4) before the life detection warning for the main filter is displayed.

In some situations, degradation in the ability of the main filter 14 to trap particles is not accurately predicted by the number of times the control circuit has detected replacement of the pre-filter with the user moving the flow switch to the RESET position. For example, the user may have replaced the pre-filter 12 before the control circuit 17 indicated the need for replacement. Also, the user may have excessively delayed replacement of the pre-filter 12. To take these and other situations into account, the control circuit 17 monitors for a second condition for replacement of the main filter 14, that condition being based on fan operation time.

The control circuit 17 detects the cumulative time during which the same main filter 14 has been in use within the housing 11 with the fan 16 running. The cumulative time is referred to as the main filter cumulative operating time ("$T_M$"). The control circuit 17 periodically saves and/or updates $T_M$ in the memory device at regular intervals, such as every 1 minute or every 10 minutes. After the power switch 42 is turned off and on, the control circuit 17 uses the $T_M$ stored previously in memory as the basis for updating. At block 52, the control circuit 17 starts to detect the main filter cumulative operating time $T_M$.

When, as shown in block 66 of FIG. 8, the main filter cumulative operating time $T_M$ exceeds a main filter operating time limit ("$T_{ML}$"), the secondary condition for replacement of main filter occurs. The control circuit 17 then continues to rotate the fan 16 but causes the main filter status light 38 to illuminate continuously. Continuous illumination serves as a warning signal to the user that the main filter 14 should be replaced to maintain maximum air cleaning effectiveness of the air cleaner assembly 10.

Any suitable main filter operating time limit may be used.

The main filter operating time limit $T_{ML}$ that is actually used can be based on the construction type, size and capacity of the main filter 14 and/or the environmental conditions in which the air cleaner assembly 10 is intended or expected to be operated. A main filter operating time limit of 2500 hours was determined by the inventors to be suitable for a main filter used for manual soldering operations and configured to trap over 99% of airborne particles of 0.3 $\mu$m in size.

After seeing the main filter status light 38 illuminated (block 66) or flashing (block 64), the user replaces the main filter 14 by moving the flow switch 44 to the RESET position, which connects the reset and common terminals of the flow switch 44.

When flow switch 44 at block 64 is moved to the RESET position, the driving state transits to block 65. This causes the pre-filter status light 36 to illuminates continuously, and causes the main filter status light 38 to flash continuously, and cuts power to the fan 16 so that the fan stops rotating. Also, the pre-filter operating time $T_P$ is set to zero due to the replacement of the pre-filter 12.

After transition from block 65, the driving state will transit depending upon the state whether or not the main filter 14 is changed.

While the fan 16 has stopped, the user can open the lid 20 to replace any of the filters. When, as shown in blocks 68, the user replaces the main filter 14 and causes the main filter reset switch 32 to actuate, the main filter operating time $T_M$ is set to zero. At this timing, the control circuit 17 resets the counter variables N and M reset to zero. Therefore, Z is also reset to zero.

After block 64, there is the possibility that the user replaces or does not replace the existing main filter 14. Removal of the existing main filter 14 allows the main filter reset switch 32 to move to the OUT position and causes the main filter status light 38 illuminate continuously. If the OUT position is maintained for at least 3 seconds, or other predetermined minimum time, the control circuit 17 detects that the main filter 14 has been replaced. When this occurs, as shown in block 68, the control circuit 17 changes the value of the main filter status flag from "NEED FOR REPLACEMENT" to "NEED NOT FOR REPLACEMENT" (or Null) and changes the main filter operating time $T_M$ and counter variables N and M to zero.

Block 68 continues to block 72. As shown in block 72, after replacement of the pre-filter 12 and the main filter 14, the main filter reset switch 32 moves to the IN position, then the control circuit 17 detects that a new main filter 14 has been installed and makes the main filter status light 38 turn off. The user can resume air suction by moving the flow switch 44 from the RESET position to one of the three flow positions, which causes the transition of the driving state to block 53 in FIG.7.

After block 65, the user may move the flow switch 44 to RESET position, then replace the pre-filter 12 but fail to replace the main filter 14. When this occurs, as shown in block 74, the pre-filter status light 36 keeps steady illumination and the main filter status light 38 continues to flash. The transition from block 65 to 67 may occur during an elapsed time from the actuation timing of the reset switch.

As shown in block 76, after moving the flow switch 44 to one of the three flow settings (high, medium, or low), the pre-filter status light 36 turns off. The main filter status flag remains at "NEED FOR REPLACEMENT" and the main filter status light 38 turns OFF after flashing only for 5 seconds because actuation of the main filter reset switch 32 was not detected by the control circuit 17. As shown in block 78, even after the power switch 42 is turned off and on, the main filter status light 38 flashes only for 5 seconds, which serves as a reminder to the user that the main filter 14 needs to be replaced.

When flow switch 44 at block 66 is moved to the RESET position, the driving state transits to block 67. This causes the pre-filter status light 36 and the main filter status light 38 to illuminate continuously and pre-filter state flag to be clear (reset). The control circuit 17 then cuts power to the fan 16 so that the fan stops rotating. Also, the pre-filter operating time $T_P$ is set to zero due to the replacement of the pre-filter 12. In this case, because the main filter cumulative operating time $T_M$ considerably exceeded from the operating state at block 64, no step is prepared to have the main filter 14 not to be replaced. Therefore, the block 67 remains unchanged until the main filter 14 is replaced.

As discussed below with reference to FIGS. 9 and 10, the inventors have found that for only the first ten replacements of the pre-filter 12, degradation in the particle trapping ability of the air cleaner assembly 10 corresponds to reduced air flow. A substantial shift in results occurs after replacement of the tenth pre-filter 12.

FIG. 9 illustrates results from a first study in which a measured amount of solder was used to create smoke and fumes that were suctioned at a constant motor speed into the air cleaner assembly 10. The lines represent a sequence of test runs using one air cleaner assembly. Each test run is designated by the letter "T" followed by a number indicating the sequential order of the test run. Each test run started with a newly installed pre-filter 12, but the main filter 14 was not replaced. The same main filter was used for all test runs. Each pre-filter was designed to trap 65% of airborne particles of 0.3 μm in size or larger when new. The main filter was designed to trap over at least 98% of airborne particles of 0.3 μm in size when new.

The left-to-right downward curvature of the lines shows that the air flow rate decreased as more solder smoke and fumes were suctioned into the air cleaner assembly 10. The downward curvature was substantially the same for the first ten test runs (T1 through T10). That is, for the first ten pre-filters that were used, the air flow through the air cleaner assembly 10 (containing the pre-filter 12 and the main filter 14) decreased at nearly the same rate as more solder smoke particles were suctioned. On the eleventh test run (T11) and thereafter (T12 through T17), the rate or slope of the downward curvature tended to decrease. That is, with each replacement of the pre-filter after T10, it took a longer amount of time (indicated by the amount of solder consumed to make smoke) for the air cleaner assembly 10 to become clogged (indicated by the decrease in air flow) even though the main filter 14 was not being replaced and was becoming less effective at trapping particles.

The reason why it takes time to decrease the air flow after T10 may come from the fact that the main filter 14 is designed to trap relatively fine particles. Particularly the method thereof is the Brownian movement of particles or static attraction due to the difference in electric potential between particles and filter fiber, which means that the main filter 14 traps quite fine particles which are smaller than the filter fiber. Therefore, the deterioration influences on taking longer time to decrease air flow.

Results of a second study, shown in FIG. 10, confirms that the main filter 14 was becoming less effective at trapping particles even though, as shown in FIG. 9, the decrease in air flow rate was taking longer with each pre-filter replacement after the tenth pre-filter. In the second study, the number of particles that were able to pass through the air cleaner (un-trapped) was measured for test runs T1 through T10, T11, and T15 of the first study. As shown in FIG. 10, the number of un-trapped particles (per cubic foot of air per minute) was about the same for test runs T1 through T10. For test runs T11 and T15, the numbers of un-trapped particles were significantly higher than in test runs T1 through T10.

In some embodiments, the first condition for replacement of the main filter occurs when $(N+0.5\times M) \geq 10$, where the correction factor C is 0.5 and the main filter limit $Z_L$ is 10. The criteria $(N+0.5\times M) \geq 10$ was determined by the inventors to be suitable for manual soldering operations, a pre-filter configured to trap 65% of airborne particles of 0.3 μm in size or larger, a the main filter configured to traps over 99% of airborne particles of 0.3 μm in size.

The shift in results observed in FIGS. 9 and 10 after a certain number of high-quality pre-filters was also observed with pre-filters constructed of a different material than what was used for FIGS. 9 and 10. TABLE 2 shows results of another study conducted in the same manner as FIG. 9 except pre-filters having a higher filtering capability were used.

TABLE 2

| High-Quality Pre-Filter | Solder Used to Make Smoke (grams) | Cumulative Amount of Solder Used (grams) |
|---|---|---|
| T1' | 45 | 45 |
| T2' | 60 | 105 |
| T3' | 75 | 180 |
| T4' | 100 | 280 |
| T5' | 80 | 360 |
| T6' | 80 | 440 |
| T7' | 110 | 550 |
| T8' | 90 | 640 |
| T9' | 75 | 715 |
| T10' | 70 | 785 |
| T11' | 105 | 890 |
| T12' | 165 | 1055 |
| T13' | 170 | 1225 |

(continued)

| High-Quality Pre-Filter | Solder Used to Make Smoke (grams) | Cumulative Amount of Solder Used (grams) |
|---|---|---|
| T14’ | 270 | 1495 |

The study was conducted using fourteen high-quality pre-filters, designated T1’ through T14’ in the first column of TABLE 2. The second column shows the amount of solder used (to make smoke that is suctioned through the air cleaner assembly) before clogging was detected for the main filter combined with the high-quality pre-filter. The third column shows the cumulative amount of solder that was used. After clogging was detected, the high-quality pre-filter was replaced, but the main filter was not replaced. TABLE 2 shows that after using a certain number of high-quality pre-filters, a greater amount of solder was needed to induce clogging. The increase in the amount of solder needed to induce clogging means that more smoke particles were passing through the main filter, which indicates deterioration of the main filter. TABLE 2 shows that a significant shift in results, which corresponds to deterioration of the main filter, occurred after the eleventh high-quality pre-filter T11’ was replaced. As shown in column 2 of TABLE 2, the amount solder needed to induce clogging for T12’ through T14’ was consistently higher than that for T1’ through T11’. This study shows that using the relationship ($N+C\times M$) to detect deterioration of the main filter, as was previously described, is valid for various types of pre-filters in combination with the main filter.

(Second Embodiment)

In some embodiments, as shown in FIGS. 11 and 12, the main filter 14 can include a fuse 90 that allows the control circuit 17 to detect that the main filter 14 is in new condition. The fuse 90 is fixedly mounted to the main filter 14 to prevent replacement or repair of the fuse 90 after the fuse has blown. The fuse 90 is connected to an electrical connector 92 permanently mounted to the main filter 14. When the main filter 14 is installed in the housing 11, the main filter 14 electrical connector 92 mates with another electrical connector 94 that is fixedly mounted within the housing 11 and connected to the control circuit 17. Upon mating, pins (labeled 1 through 4) in the connectors 92, 94 make contact to form various electrical lines.

In FIG. 12, components illustrated in the "control circuit side" are parts of the control circuit 17, and all components illustrated in the "main filter side" are parts of the main filter 14. A first electrical line 96 has a 5-volt supply 96a at the control circuit side. When the main filter 14 is installed in the housing 11, the 5-volt supply 96a is grounded through connector pins 1 and 4, which results in a low signal level reading by the control circuit 17. The low signal level reading on the first electrical line 96 is used by the control circuit 17 to detect that the main filter 14 is installed in the housing 11. When the main filter 14 is removed from the housing 11, a high signal level reading on the first electrical line 96 is detected by the control circuit 17.

A second electrical line 98 has a 5-volt supply 98a at the control circuit side. When the main filter 14 is installed in the housing 11, the second electrical line 98 passes through connector pins 2 and 4. On the main filter side, the fuse 90 is located between connector pins 2 and 4. When the main filter 14 is new, the fuse 90 is intact and has a closed state, which allows the 5-volt supply 98a to be grounded and results in a low signal level reading on the second electrical line 98. The low signal level reading on the second electrical line 98 is used by the control circuit 17 to detect that the main filter 14 does not need to be replaced.

There is connected to the second electrical line 98 a means or circuit 100 for blowing the fuse 90, which comprises two resistors having values R2 and R1 and a transistor having a value Q1. A "fuse cutoff" command from the control circuit 17 causes an increase in the electrical current through the fuse 90 which causes the fuse to blow and have an open state. Values for R2, R1 and Q1 can be selected to allow for a sufficient increase in current that ensures the fuse 90 blows according to the fuse cutoff command. When the fuse 90 has the open state, the 5-volt supply is no longer grounded, resulting in a high signal level reading on the second electrical line 98. The high signal level reading on the second electrical line 98 is used by the control circuit 17 to recall that the main filter 14 still needs to be replaced. The high signal level reading on the second electrical line 98 causes the control circuit 17 to change the value of the main filter status flag to "NEED FOR REPLACEMENT."

The control circuit 17 sends the fuse cutoff command, thereby blowing the fuse 90, when any of the previously described conditions for main filter replacement is detected by the control circuit 17. For example, the control circuit 17 sends the fuse cutoff command when count value Z of formula (1) or $Z=N+C\times M$ exceeds the main filter limit $Z_L$. Optionally, the control circuit 17 also sends the fuse cutoff command when the main filter cumulative operating time $T_M$ exceeds a main filter operating time limit $T_{ML}$.

The fuse 90 is blown according to the state of a fuse state flag. The fuse state flag can be a Boolean with two values: "TRUE" and "FALSE." "TRUE" indicates one state that the fuse has been blown, and "FALSE" (including Null) indicates another state that the fuse is intact.

Operation of the air cleaner assembly 10 of some embodiments of the present invention will now be described with reference to FIGS. 14 and 15.

FIG. 14, which relates to replacing the pre-filter 12, is discussed first.

At block 150, the user moves the power switch 42 from the OFF position to the ON position, which causes 40 volts to be supplied to the control circuit 17 and causes the power status light 40 to illuminate.

When a high signal level is detected on the first electrical line 96 (main filter is not installed), the fan 16 does not rotate, as shown in block 154. In block 154, the control circuit 17 causes the power status light 40 to flash on and off. With the fan 16 stopped, the user may open the housing 11 to install the main filter.

On the contrary, when the control circuit detects a low signal level on the first electrical line 96 (main filter 14 is installed) and a low signal level on the second electrical line 98 (fuse is intact), the control circuit 17 detects that the main filter 14 need not be replaced and causes the fan 16 to rotate at a speed according to the position of the flow switch 44, as shown in block 152. When the driving state transits to block 152, the control circuit 17 starts the pre-filter cumulative operating time ("$T_P$") and the main filter cumulative operating time ("$T_M$"). As shown in block 153, the control circuit 17 continues to detect the cumulative time during which the same pre-filter 12 has been in use within the housing 11 with the fan 16 running. The cumulative time is referred to as the pre-filter cumulative operating time ("$T_P$"). The control circuit 17 periodically saves and/or updates $T_P$ in the memory device at regular intervals, such as every 1 minute or every 10 minutes. After the power switch 42 is turned off and on, the control circuit 17 uses the $T_P$ stored previously in memory as the basis for updating.

Continuing from block 153, the control circuit 17 detects motor speed and compares the motor speed to various rotation rate limits. As shown at block 156, when the motor speed ("S") exceeds a first rotate rate limit ("$S_{L1}$"), for example 4750 rpm, the control circuit 17 determines that the clogging of pre-filter 12 to have occurred. The control circuit 17 then continues to rotate the fan 16 but causes the pre-filter status light 36 to start flash on and off at a relatively slow rate (first warning). The relatively slow flashing rate serves as a first warning signal to the user that the pre-filter 12 is clogged and should be replaced.

At block 156, the control circuit 17 increases by 1 a first counter variable ("N"), and sets a value of pre-filter status flag to indicate "NEED FOR REPLACEMENT," indicating that the pre-filter 12 should be replaced by the user. The first counter variable and the pre-filter status flag are stored in the memory device of the control circuit 17.

As shown at block 158, when the motor speed ("S") at block 156 exceeds a second rotation rate limit ("$S_{L2}$"), for example 4950 rpm, the control circuit 17 continues to rotate the fan 16 but causes the pre-filter status light 36 to start flashing on and off at a relatively fast rate (second warning). The relatively fast flashing rate serves as a second warning signal to the user that the pre-filter 12 has become even more clogged and should be replaced.

The first and second rotation rate limits $S_{L1}$ and $S_{L2}$ used by the control circuit 17 depends upon the flow position of the flow switch 44, as was discussed in connection with FIG. 7. The control circuit 17 has stored within it a matrix of rotation rate limits, there being a first and second rotation rate limit for each flow setting. In some embodiments, the matrix of rotation rate limits is as shown in TABLE 1.

When, as shown in block 162 of FIG. 14, the pre-filter cumulative operating time $T_P$ exceeds a pre-filter operating time limit ("$T_{PL}$"), the control circuit 17 determines that the end of useful life of the pre-filter 12 to have occurred. The control circuit 17 then continues to rotate the fan 16 but causes the pre-filter status light 36 to start flashing on and off. Any suitable pre-filter operating time limit $T_{PL}$ may be used, as was discussed in connection with FIG. 7.

At block 162, the control circuit 17 increases by 1 a second counter variable ("M"), and sets the value of the pre-filter status flag to indicate "NEED FOR REPLACEMENT," indicating that the pre-filter 12 should be replaced by the user.

Because the pre-filter status flag is stored in memory, the control circuit 17 can recall, even after the power switch 42 is turned off and on, that the existing pre-filter 12 has reached a condition for replacement (either due to clogging or end of useful life) and that the pre-filter 12 still needs to be replaced. Similarly, because counter variables N and M are stored in memory, the control circuit 17 can keep track of the number of times the pre-filter 12 has been detected to have clogged or deteriorated even after the power switch 42 is turned off and on.

Upon seeing the flashing pre-filter status light 36 during driving state shown in block 156, 158, or 162, the user replaces the pre-filter 12 by moving the flow switch 44 to the RESET position. As a result, the driving state transits from block 156, 158, or 162 to block 160.

As shown in blocks 160 of FIG. 14, the RESET position causes the control circuit 17 to cut power to the fan 16 so that the fan 16 stops rotating, and to make the pre-filter status light 36 stay on continuously. While the fan 16 has stopped, the user can open the lid 20 to replace the existing pre-filter 12 with a new pre-filter 12. The RESET position also changes the pre-filter status flag from "NEED FOR REPLACEMENT" to "NEED NOT FOR REPLACEMENT," which allows the control circuit 17 to recall that the pre-filter 12 has been replaced by the user. The RESET position does not set to zero counter variables N and M. Both N and M remain unchanged. After installing a new pre-filter 12 over the existing main filter 14 and closing the lid 20, the user can resume air suction by moving the flow switch 44 from the RESET position to one of the three flow positions. Further, replacing the pre-filter 12 does not affect the main filter cumulative operating time $T_M$.

FIG. 15, which relates to replacement of the main filter 14, will now be discussed. As indicated above, one condition for replacement of the main filter 14 is a function of counter variables N and M, which correspond to the number of times the pre-filter 12 was detected to have clogged or deteriorated. The control circuit 17 calculates a value Z according to the formula (1) or $Z=N+C\times M$. The control circuit 17 compares Z to a limit value, referred to as a main filter limit ("$Z_L$"), stored in the memory device of the control circuit 17. Any suitable values for C and $Z_L$ may be used, as was discussed in connection with FIG. 8.

As shown in block 164, a primary condition for replacement of the main filter 14 occurs when Z exceeds the main filter limit $Z_L$. Under this condition, the control circuit 17 continues to rotate the fan 16 but causes the pre-filter status light 36 to start flashing on and off.

At block 164, the control circuit 17 sends a fuse cutoff command to the first electrical line 98 (FIG. 12) in an attempt to blow the fuse 90.

When, the fuse 90 is successfully blown within a predetermined attempt X th times (X th in FIG.15: ("X") may be 10), as shown in block 166, the control circuit 17 confirms that the fuse 90 is blown by detecting a high signal level on the second electrical line 98 (FIG. 12). As a result, the control circuit 17 changes a fuse blown flag to "TRUE(FUSE IS BLOWN)".

The control circuit 17 may detect that the fuse 90 failed to blow by detecting a low level on the second electrical line 98 (FIG. 12). If the fuse 90 fails to blow after ten attempts, the control circuit 17 stops the fan 16, keeps the fuse blown flag as "FALSE," and causes all three indicator lights to flash on and off, as shown in block 168. With $Z > Z_L$ and there being a low signal level on the second electrical line 98 (fuse not blown), the control circuit 17 keeps the fan 16 stopped even after the power switch 42 is turned off and on again. The fan is stopped because the user may have installed a non-genuine main filter or attempted to bypass the blown fuse 90 of the main filter 14 by installing a jumper wire on the blown fuse 90 (Fig.12), or because the control circuit failed to blow the fuse.

Still referring to FIG. 15 and continuing from block 166, the user may reset the flow switch 44 and then install a new pre-filter 12 and new main filter 14 in the housing 11. The new main filter 14 will have a fuse 90 that is intact. Consequently, as shown in block 170, the control circuit 17 detects a low signal level on the second electrical line 98 (FIG. 12). This causes the control circuit 17 to set both counter variables N and M to zero, to set the pre-filter cumulative operating time $T_P$ to zero, and to reset both the pre-filter status flag and the fuse blown flag. Since the counter variables N and M are reset to 0, counted value Z is also reset to 0.

As shown in block 172, where the power is turned ON, a forced reset condition occurs if the control circuit 17 could simultaneously detect a high signal level on the first electrical line 96 (corresponding to absence of main filter) and a low signal level on the second electrical line 98 (corresponding to the presence of intact fuse). Since the absence of the main filter 14 and the presence of an intact fuse are inconsistent with each other, the control circuit stops the fan 16 and resets all parameters to either zero or clear.

When, as shown in block 174 of FIG. 15, the main filter cumulative operating time $T_M$ exceeds a main filter operating time limit ("$T_{ML}$"), the control circuit 17 continues to rotate the fan 16. At block 174, the control circuit 17 also tries to blow the fuse 90 similarly to the driving state of block 164. The driving state transits to block 170 if the fuse is successfully blown and the main filter is replaced, or block 168 if the control circuit 17 failed to blow the fuse within 10 times attempt.

While several particular forms of the invention have been illustrated and described, it will also be apparent that various modifications can be made without departing from the scope of the invention. It is also contemplated that various combinations or subcombinations of the specific features and aspects of the disclosed embodiments can be combined with or substituted for one another in order to form varying modes of the invention. For example, embodiments of the present invention include combined use of the main filter reset switch 32 and a main filter having a fuse 90. Accordingly, it is not intended that the invention be limited, except as by the appended claims.

## Claims

**1.** An air cleaner assembly (10) comprises:

- a housing (11);
- a fan (16) accommodated in the housing (11) and configured to draw air into the housing (11);
- a pre-filter (12) disposed in an air passage of the housing (11); and
- a main filter (14) in the air passage and disposed between the pre-filter (12) and the fan (16),

**characterized by**

- display means configured to indicate warnings for replacement for each filter individually; and
- control means (17) configured to control the display,

wherein the control means (17) is configured to:

-- count a number ("N") of times that clogging of the pre-filter (12) has been detected;
-- count a number ("M") of times that end of useful life of the pre-filter (12) has been detected;
-- calculate a counting value ("Z") in accordance with following formula:

$$Z = N + C \times M \qquad (1)$$

where ("C") is a correction factor, and
-- control the display means to indicate that the main filter (14) should be replaced when the count value ("Z") exceeds a main filter (14) limit.

**2.** The air cleaner assembly according to claim 1, wherein the control means (17) is adapted to control the display means so that the display means individually indicates signals for replacement of the pre-filter (12) when the timing for the pre-filter (12) replacement is detected and individually indicates signals for replacement of the main filter (14) when the timing for the main filter (14) replacement is detected.

**3.** The air cleaner assembly according to claim 1 or 2,
wherein the control means (17) is adapted to control the display means to indicate that the pre-filter (12) should be replaced when the control means (17) detects clogging of the pre-filter (12) to have occurred or the end of useful life of the pre-filter (12) to have occurred; and indicate that the main filter (14) should be replaced when a number of times satisfies pre-determined conditioned number that clogging of the pre-filter (12) has been detected and when end of useful life of the pre-filter (12) has been detected.

**4.** The assembly according to any one of the preceding claims, wherein the main filter (14) comprises a fuse (90), and the control means (17) causes the fuse (90) to blow when the count value ("Z") exceeds the main filter (14) limit.

**5.** The assembly according to any one of the preceding claims, wherein the main filter (14) is of an absorption type, which, when new, traps over at least 98% of airborne particles of 0.3μm in size at rated wind velocity, the pre-filter, when new, traps over at least 65% of airborne particles of 0.3μm in size at rated wind velocity, the count value ("Z") is 10, and the correction factor ("C") is 0.5.

**6.** The assembly according to any one of claims 1 to 5, further comprising:

a sensor that detects motor speed for driving the fan (16); and
means for memorizing a motor speed limit corresponding to the clogging of the pre-filter (12),
wherein the control means (17) is further configured to compare the motor speed detected by the sensor with the motor speed limit memorized in the means for judgment as to whether the pre-filter (12) is clogged, and control the display means to indicate that the pre-filter (12) should be replaced when the control means (17) determines that the clogging of pre-filter (12) is detected as the motor speed exceeds the motor speed limit.

**7.** The assembly according to any one of claims 1 to 6, further comprising means for memorizing a pre-filter (12) operating time limit corresponding to the end of useful life occurrences of the pre-filter (12),
wherein the control means (17) is further configured to detect a pre-filter (12) cumulative operating time, and control the display means to indicate that the pre-filter (12) should be replaced when the control means (17) determines that the end of useful life of the pre-filter (12) is detected as the pre-filter (12) cumulative operating time exceeds the pre-filter (12) operating time limit.

**8.** The assembly according to claim 7, wherein the control means (17) is configured to detect the pre-filter (12) by a reset operation of a pre-reset switch which is adapted, when the driving mode is changed to a reset mode, to reset the pre-filter (12) cumulative operating time detected by the means for detecting the pre-filter (12) cumulative operating time.

**9.** The assembly according to claim 8, wherein the control means (17) comprises nonvolatile memory means for memorizing a pre-filter (12) state flag of Boolean of which values indicate whether replacement of the pre-filter (12) is needed, wherein the control means (17) is further configured to set the pre-filter (12) state flag memorized in the memory means to the value "NEED FOR REPLACEMENT" when one of the clogging and the end of useful life occurrences of the pre-filter (12) is detected, and the control means (17) is further configured to set the pre-filter (12) state flag to the value "NEED NOT FOR REPLACEMENT" when the pre-reset switch is actuated.

**10.** The assembly according to any one of claims 1 to 9, further comprises:

means for detecting the main filter (14) accommodated in the housing (11); and
means for memorizing a main filter (14) operating time limit corresponding to the end of useful life occurrences of the main filter (14),
wherein the control means (17) is further configured to detect a main filter (14) cumulative operating time for judgment as to whether the main filter (14) is deteriorated, and control the display means to indicate that main filter (14) should be replaced when the control means (17) determines that the end of life of the main filter (14) is detected as the main filter (14) cumulative operating time exceeds the main filter (14) operating time limit.

**11.** The assembly according to claim 10, wherein the means for detecting the main filter (14) is a main filter reset switch (32) configured to reset the main filter cumulative operating time when the main filter is replaced.

**12.** The assembly according to claim 11, wherein when the main filter reset switch (32) is actuated, the control means (17) controls the display means to indicate that the main filter (14) need not be replaced.

**13.** The assembly according to claim 12, wherein the control means (17) comprises nonvolatile memory means for memorizing a main filter (14) state flag of Boolean of which values indicate whether replacement of the main filter (14) is needed,
wherein the control means (17) is further configured to set the main filter (14) state flag to the value "NEED FOR REPLACEMENT" when the end of useful life occurrences of the main filter (14) is detected, and the control means (17) is further configured to set the main filter (14) state flag to the value "NEED NOT FOR REPLACEMENT" when the main filter reset switch (32) is actuated, and the display means is configured to indicate that the main filter (14) should be replaced when the value of the main filter (14) state flag is set to "NEED FOR REPLACEMENT", and the display means is configured to indicate that the main filter (14) need not be replaced when the value of the main filter (14) state flag is set to "NEED NOT FOR REPLACEMENT".

**14.** The assembly according to any one of claims 1 to 13,
wherein the pre-filter (12) is of an absorption type,
the main filter (14), disposed downstream side from the pre-filter (12), is of an absorption type having higher absorption capacity and longer useful life than the pre-filter (12).

**15.** A method performed by control means (17) of an air cleaner assembly having

- a housing,
- a fan (16) accommodated in the housing (11) and configured to draw air into the housing (11),
- a pre-filter (12) disposed in an air passage of the housing (11),
- a main filter (14) in the air passage and disposed between the pre-filter (12) and the fan (16), and
- display means operatively connected to said control means (17) so as to indicate warnings for replacement for each filter individually,

**characterized by**

-- a step of counting a number ("N") of times that clogging of the pre-filter (12) has been detected;
-- a step of counting a number ("M") of times that end of useful life of the pre-filter (12) has been detected;
-- a step of calculating a counting value ("Z") in accordance with following formula:

$$Z = N + C \times M \qquad (1)$$

where ("C") is a correction factor; and
-- a step of controlling the display means to indicate that the main filter (14) should be replaced when the count value ("Z") exceeds a main filter (14) limit.

**16.** The method according to claim 15, wherein the step of counting the ("N") is including a step of detecting a motor speed ("S") for driving the fan (16), and a step of determining the clogging of the pre-filter (12) has occurred when the detected motor speed ("S") exceeds a predetermined rotation limit.

**17.** The method according to claim 15 or 16, wherein the step of counting the ("M") includes a step of detecting a pre-filter (12) cumulative operating time during which the same pre-filter (12) has been in use within the housing (11) with the fan (16) running, and a step of determining the end of useful life occurrences of the pre-filter (12) when the pre-filter (12) cumulative operating time exceeds a predetermined operating time limit.

**18.** The method according to any one of claims 15 to 17, further comprising a step of blowing a fuse (90) on the main filter (14) when the count value ("Z") (=N+C x M) exceeds the main filter (14) limit.

**19.** The method according to any one of claims 15 to 18, further comprising a step of controlling the display means to indicate that the main filter (14) should be replaced when a main filter (14) cumulative operating time during which the same main filter (14) has been in use within the housing (11) with the fan (16) running exceeds a main filter (14) operating time limit.

**Patentansprüche**

**1.** Luftreinigeranordnung (10), umfassend:

- ein Gehäuse (11);
- ein Gebläse bzw. einen Lüfter bzw. Ventilator (16), das bzw. der in dem Gehäuse (11) untergebracht und konfiguriert ist, Luft in das Gehäuse (11) zu ziehen;
- einen Vorfilter (12), der in einem Luftdurchgang des Gehäuses (11) angeordnet ist; und
- einen Hauptfilter (14) in dem Luftdurchgang und angeordnet zwischen dem Vorfilter (12) und dem Gebläse (16),

**gekennzeichnet durch**

- Anzeigemittel, die konfiguriert sind, Warnhinweise zum Ersetzen für jeden Filter einzeln anzugeben; und
- Steuer- bzw. Regelmittel (17), die konfiguriert sind, die Anzeige zu steuern bzw. zu regeln,

wobei das Steuer- bzw. Regelmittel (17) konfiguriert ist:

-- eine Anzahl ("N") von Malen zu zählen, die ein Verstopfen des Vorfilters (12) detektiert wurde;
-- eine Anzahl ("M") von Malen zu zählen, die ein Ende der Nutzungsdauer des Vorfilters (12) detektiert wurde;
-- einen Zählwert ("Z") gemäß der folgenden Formel zu berechnen:

$$Z = N + C \times M \qquad (1)$$

wo ("C") ein Korrekturfaktor ist, und
-- die Anzeigemittel dahingehend zu steuern bzw. zu regeln, anzugeben, dass der Hauptfilter (14) ersetzt werden sollte, wenn der Zählwert ("Z") eine Hauptfilter(14)-Grenze überschreitet.

**2.** Luftreinigeranordnung nach Anspruch 1, wobei das Steuer- bzw. Regelmittel (17) angepasst ist, das Anzeigemittel zu steuern bzw. zu regeln, so dass das Anzeigemittel Signale zum Ersetzen des Vorfilters (12) einzeln angibt, wenn der Zeitpunkt für das Ersetzen des Vorfilters (12) detektiert wird, und Signale zum Ersetzen des Hauptfilters (14) einzeln angibt, wenn der Zeitpunkt für das Ersetzen des Hauptfilters (14) detektiert wird.

**3.** Luftreinigeranordnung nach Anspruch 1 oder 2, wobei das Steuer- bzw. Regelmittel (17) angepasst ist, das Anzeigemittel dahingehend zu steuern bzw. zu regeln, anzugeben, dass der Vorfilter (12) ersetzt werden sollte, wenn das Steuer- bzw. Regelmittel (17) das Auftreten eines Verstopfens des Vorfilters (12) oder das Auftreten des Endes der Nutzungsdauer des Vorfilters (12) detektiert; und anzugeben, dass der Hauptfilter (14) ersetzt werden sollte, wenn eine Anzahl von Malen die vorbestimmte konditionierte Anzahl erfüllt, dass bzw. die das Verstopfen des Vorfilters (12) detektiert wurde, und wenn das Ende der Nutzungsdauer des Vorfilters (12) detektiert wurde.

**4.** Anordnung nach einem der vorhergehenden Ansprüche, wobei der Hauptfilter (14) eine Sicherung (90) umfasst und das Steuer- bzw. Regelmittel (17) die Sicherung (90) veranlasst, durchzuhauen bzw. durchzubrennen, wenn der Zählwert ("Z") die Hauptfilter(14)-Grenze überschreitet.

**5.** Anordnung nach einem der vorhergehenden Ansprüche, wobei der Hauptfilter (14) von einem Absorptionstyp ist, der, wenn er neu ist, über zumindest 98% luftgetragener bzw. schwebender Partikel von 0,3 μm Größe bei Nennwindgeschwindigkeit einfängt, der Vorfilter, wenn er neu ist, über zumindest 65% luftgetragener bzw. schwebender Partikel von 0,3 μm Größe bei Nennwindgeschwindigkeit einfängt, der Zählwert ("Z") 10 ist und der Korrekturfaktor ("C") 0,5 ist.

**6.** Anordnung nach einem der Ansprüche 1 bis 5, ferner umfassend:

einen Sensor, der eine Motordrehzahl zum Antreiben des Gebläses (16) detektiert; und
Mittel zum Speichern einer Motordrehzahlgrenze entsprechend dem Verstopfen des Vorfilters (12),
wobei das Steuer- bzw. Regelmittel (17) ferner konfiguriert ist, die von dem Sensor detektierte Motordrehzahl mit der Motordrehzahlgrenze zu vergleichen, die in dem Mittel gespeichert ist, um zu beurteilen, ob der Vorfilter (12) verstopft ist, und das Anzeigemittel dahingehend zu steuern bzw. zu regeln, anzugeben, dass der Vorfilter (12) ersetzt werden sollte, wenn das Steuer- bzw. Regelmittel (17) bestimmt, dass das Verstopfen des Vorfilters (12) detektiert wird, wenn die Motordrehzahl die Motordrehzahlgrenze überschreitet.

**7.** Anordnung nach einem der Ansprüche 1 bis 6, ferner umfassend Mittel zum Speichern einer Vorfilter(12)-Betriebszeitgrenze entsprechend dem Ende von Nutzungsdauerauftreten des Vorfilters (12),
wobei das Steuer- bzw. Regelmittel (17) ferner konfiguriert ist, eine kumulative Vorfilter(12)-Betriebszeit zu detektieren und das Anzeigemittel dahingehend zu steuern bzw. zu regeln, anzugeben, dass der Vorfilter (12) ersetzt werden sollte, wenn das Steuer- bzw. Regelmittel (17) bestimmt, dass das Ende der Nutzungsdauer des Vorfilters (12) detektiert wird, wenn die kumulative Vorfilter(12)-Betriebszeit die Vorfilter(12)-Betriebszeitgrenze überschreitet.

**8.** Anordnung nach Anspruch 7, wobei das Steuer- bzw. Regelmittel (17) konfiguriert ist, den Vorfilter (12) durch eine Reset- bzw. Rücksetzoperation eines Pre-Reset- bzw. Vorrücksetzschalters zu detektieren, der angepasst ist, wenn der Antriebsmodus zu einem Reset-Modus geändert wird, die kumulative Vorfilter(12)-Betriebszeit zurückzusetzen, die von dem Mittel zum Detektieren der kumulativen Vorfilter(12)-Betriebszeit detektiert wird.

**9.** Anordnung nach Anspruch 8, wobei das Steuer- bzw. Regelmittel (17) nicht flüchtige Speichermittel zum Speichern eines booleschen Vorfilter(12)-Zustand-Flags bzw. -Marke umfasst, von dem Werte angeben, ob ein Ersetzen des Vorfilters (12) erforderlich ist, wobei das Steuer- bzw. Regelmittel (17) ferner konfiguriert ist, den in dem Speichermittel gespeicherten Vorfilter(12)-Zustand-Flag auf "NOTWENDIGKEIT ZUM ERSETZEN" zu setzen, wenn eines von Verstopfen und Ende der Nutzungdauerauftreten des Vorfilters (12) detektiert wird, und wobei das Steuer- bzw. Regelmittel (17) ferner konfiguriert ist, den Vorfilter(12)-Zustand-Flag auf den Wert "KEINE NOTWENDIGKEIT ZUM ERSETZEN" zu setzen, wenn der Pre-Reset-Schalter betätigt wird bzw. ist.

**10.** Anordnung nach einem der Ansprüche 1 bis 9, ferner umfassend:

Mittel zum Detektieren des Hauptfilters (14), der in dem Gehäuse (11) untergebracht ist; und
Mittel zum Speichern einer Hauptfilter(14)-Betriebszeitgrenze entsprechend dem Ende von Nutzungsdauerauftreten des Hauptfilters (14),
wobei das Steuer- bzw. Regelmittel (17) ferner konfiguriert ist, eine kumulative Hauptfilter(14)-Betriebszeit zu detektieren, um zu beurteilen, ob der Hauptfilter (14) verschlechtert ist, und das Anzeigemittel dahingehend zu steuern bzw. zu regeln, anzugeben, dass der Hauptfilter (14) ersetzt werden sollte, wenn das Steuer- bzw. Regelmittel (17) bestimmt, dass das Ende des Lebens bzw. der Dauer des Hauptfilters (14) detektiert wird, wenn die kumulative Hauptfilter(14)-Betriebszeit die Hauptfilter(14)-Betriebszeitgrenze überschreitet.

**11.** Anordnung nach Anspruch 10, wobei das Mittel zum Detektieren des Hauptfilters (14) ein Hauptfilter-Reset- bzw. -Rücksetz-Schalter (32) ist, der konfiguriert ist, die kumulative Hauptfilterbetriebszeit zurückzusetzen, wenn der Hauptfilter ersetzt wird.

**12.** Anordnung nach Anspruch 11, wobei, wenn der Hauptfilter-Reset-Schalter (32) betätigt wird, das Steuer- bzw. Regelmittel (17) das Anzeigemittel dahingehend steuert bzw. regelt, anzugeben, dass der Hauptfilter (14) nicht ersetzt werden muss.

**13.** Anordnung nach Anspruch 12, wobei das Steuer- bzw. Regelmittel (17) nicht flüchtige Speichermittel zum Speichern eines booleschen Hauptfilter(14)-Zustand-Flags bzw. -Marke umfasst, von dem Werte angeben, ob ein Ersetzen des Hauptfilters (14) erforderlich ist,
wobei das Steuer- bzw. Regelmittel (17) ferner konfiguriert ist, den Hauptfilter(14)-Zustand-Flag auf "NOTWENDIGKEIT ZUM ERSETZEN" zu setzen, wenn das Ende der Nutzungdauerauftreten des Hauptfilters (14) detektiert wird, und wobei das Steuer- bzw. Regelmittel (17) ferner konfiguriert ist, den Hauptfilter(14)-Zustand-Flag auf den Wert "KEINE NOTWENDIGKEIT ZUM ERSETZEN" zu setzen, wenn der Hauptfilter-Reset-Schalter (32) betätigt wird bzw. ist, und wobei das Anzeigemittel konfiguriert ist, anzugeben, dass der Hauptfilter (14) ersetzt werden sollte, wenn der Wert des Hauptfilter(14)-Zustand-Flags auf "NOTWENDINGKEIT ZUM ERSETZEN" gesetzt ist, und das Anzeigemittel konfiguriert ist, anzugeben, dass der Hauptfilter (14) nicht ersetzt werden muss, wenn der Wert des Hauptfilter(14)-Zustand-Flags auf "KEINE NOTWENDIGKEIT ZUM ERSETZEN" gesetzt ist.

**14.** Anordnung nach einem der Ansprüche 1 bis 13,
wobei der Vorfilter (12) von einem Absorptionstyp ist,
der Hauptfilter (14), der auf der stromabwärtigen Seite von dem Vorfilter (12) angeordnet ist, von einem Absorptionstyp ist, der eine höhere Absorptionskapazität und eine längere Nutzungsdauer aufweist als der Vorfilter (12).

**15.** Verfahren, das durch Steuer- bzw. Regelmittel (17) einer Luftreinigeranordnung durchgeführt wird, die aufweist

- ein Gehäuse (11);
- ein Gebläse bzw. einen Lüfter bzw. Ventilator (16), das bzw. der in dem Gehäuse (11) untergebracht und konfiguriert ist, Luft in das Gehäuse (11) zu ziehen;
- einen Vorfilter (12), der in einem Luftdurchgang des Gehäuses (11) angeordnet ist;
- einen Hauptfilter (14) in dem Luftdurchgang und angeordnet zwischen dem Vorfilter (12) und dem Gebläse (16), und
- Anzeigemittel, die wirkungsmäßig mit den Steuer- bzw. Regelmitteln (17) verbunden sind, um Warnhinweise zum Ersetzen für jeden Filter einzeln anzugeben,

**gekennzeichnet durch**

-- einen Schritt des Zählens einer Anzahl ("N") von Malen, die ein Verstopfen des Vorfilters (12) detektiert wurde;
-- einen Schritt des Zählens einer Anzahl ("M") von Malen, die ein Ende der Nutzungsdauer des Vorfilters (12) detektiert wurde;
-- einen Schritt des Berechnens eines Zählwerts ("Z") gemäß der folgenden Formel:

$$Z = N + C \times M \qquad (1)$$

wo ("C") ein Korrekturfaktor ist, und
-- einen Schritt des Steuerns bzw. Regelns der Anzeigemittel dahingehend, anzugeben, dass der Hauptfilter (14) ersetzt werden sollte, wenn der Zählwert ("Z") eine Hauptfilter(14)-Grenze überschreitet.

**16.** Verfahren nach Anspruch 15, wobei der Schritt des Zählens von ("N") einen Schritt des Detektierens einer Motordrehzahl ("S") zum Antrieben des Gebläses (16) und einen Schritt des Bestimmens des Auftretens eines Verstopfens des Vorfilters (12), wenn die detektierte Motordrehzahl ("S") eine vorbestimmte Rotationsgrenze überschreitet, enthält bzw. umfasst.

**17.** Verfahren nach Anspruch 15 oder 16, wobei der Schritt des Zählens von ("M") einen Schritt des Detektierens einer kumulativen Vorfilter(12)-Betriebszeit, während der derselbe Vorfilter (12) in dem Gehäuse (11) mit dem Gebläse (16) laufend in Gebrauch war, und einen Schritt des Bestimmens des Endes von Nutzungsdauerauftreten des Vorfilters (12), wenn die kumulative Vorfilter(12)-Betriebszeit eine vorbestimmte Betriebszeitgrenze überschreitet, enthält bzw. umfasst.

**18.** Verfahren nach einem der Ansprüche 15 bis 17, ferner umfassend einen Schritt des Durchhauens bzw. Durchbrennens einer Sicherung (90) an dem Hauptfiler (14), wenn der Zählwert ("Z") (=N+CxM) eine Hauptfilter(14)-Grenze überschreitet.

**19.** Verfahren nach einem der Ansprüche 15 bis 18, ferner umfassend einen Schritt des Steuerns bzw. Regelns der Anzeigemittel dahingehend, anzugeben, dass der Hauptfilter (14) ersetzt werden sollte, wenn eine kumulative Hauptfilter(14)-Betriebszeit, während der derselbe Hauptfilter (14) in dem Gehäuse (11) mit dem Gebläse (16) laufend in Gebrauch war, eine Hauptfilter(14)-Betriebszeitgrenze überschreitet.

## Revendications

**1.** Ensemble de purificateur d'air (10), comprenant:

- un carter (11) ;
- un ventilateur (16) logé dans le carter (11) et configuré pour aspirer de l'air dans le carter (11) ;
- un préfiltre (12) disposé dans un passage d'air du carter (11) ; et
- un filtre principal (14) dans le passage d'air et disposé entre le préfiltre (12) et le ventilateur (16),

**caractérisé par**

- des moyens d'affichage configurés pour indiquer des avertissements de remplacement de chaque filtre individuellement ; et
- des moyens de commande (17) configurés pour commander l'affichage,

dans lequel les moyens de commande (17) sont configurés pour :

- compter un nombre (« N ») de fois qu'un colmatage du préfiltre (12) a été détecté ;
- compter un nombre (« M ») de fois que la fin de vie utile du préfiltre (12) a été détectée ;

-- calculer une valeur de comptage (« Z ») selon la formule suivante :

$$Z= N+CxM \quad (1)$$

où (« C ») est un facteur de correction, et
-- commander les moyens d'affichage pour qu'ils indiquent que le filtre principal (14) doit être remplacé quand la valeur de comptage (« Z ») dépasse une limite de filtre principal (14).

**2.** Ensemble de purificateur d'air selon la revendication 1, dans lequel les moyens de commande (17) sont adaptés pour commander les moyens d'affichage pour que les moyens d'affichage indiquent individuellement des signaux de remplacement du préfiltre (12) quand le moment du remplacement du préfiltre (12) est détecté, et indiquent individuellement des signaux pour le remplacement du filtre principal (14) quand le moment du remplacement du filtre principal (14) est détecté.

**3.** Ensemble de purificateur d'air selon la revendication 1 ou 2, dans lequel les moyens de commande (17) sont adaptés pour commander les moyens d'affichage pour qu'ils indiquent que le préfiltre (12) doit être remplacé quand les moyens de commande (17) détectent qu'un colmatage du préfiltre (12) est survenu ou que la fin de la vie utile du préfiltre (12) est arrivée ; et indiquent que le filtre principal (14) doit être remplacé quand un nombre de fois respecte le nombre conditionné prédéterminé qu'un colmatage du préfiltre (12) a été détecté et quand la fin de la vie utile du préfiltre (12) a été détectée.

**4.** Ensemble selon l'une quelconque des revendications précédentes, dans lequel le filtre principal (14) comprend un fusible (90), et les moyens de commande (17) amènent le fusible (90) à sauter quand la valeur de comptage (« Z ») dépasse la limite du filtre principal (14).

**5.** Ensemble selon l'une quelconque des revendications précédentes, dans lequel le filtre principal (14) est d'un type à absorption qui, quand il est neuf, piège au moins 98 % de particules aéroportées de 0,3 μm de dimension à une vitesse de vent nominale, le préfiltre, quand il est neuf, piège au moins 65 % de particules aéroportées de 0,3 μm de dimension à une vitesse de vent nominale, la valeur de comptage (« Z ») est égale à 10, et le facteur de correction (« C ») est égal à 0,5.

**6.** Ensemble selon l'une quelconque des revendications 1 à 5, comprenant en outre:

un capteur qui détecte la vitesse du moteur pour entraîner le ventilateur (16) ; et
des moyens pour mémoriser une limite de vitesse du moteur correspondant au colmatage du préfiltre (12),
dans lequel les moyens de commande (17) sont en outre configurés pour comparer la vitesse du moteur détectée par le capteur avec la limite de vitesse du moteur mémorisée dans les moyens pour juger si le préfiltre (12) est colmaté, et pour commander les moyens d'affichage pour qu'ils indiquent que le préfiltre (12) doit être remplacé quand les moyens de commande (17) déterminent que le colmatage du préfiltre (12) est détecté lorsque la vitesse du moteur dépasse la limite de vitesse du moteur .

**7.** Ensemble selon l'une quelconque des revendications 1 à 6, comprenant en outre des moyens pour mémoriser une limite de temps de fonctionnement du préfiltre (12) correspondant à des survenues de la fin de la vie utile du préfiltre (12),
dans lequel les moyens de commande (17) sont en outre configurés pour détecter un temps de fonctionnement cumulé du préfiltre (12), et commander les moyens d'affichage pour qu'ils indiquent que le préfiltre (12) doit être remplacé quand les moyens de commande (17) déterminent que la fin de la vie utile du préfiltre (12) est détectée lorsque le temps de fonctionnement cumulé du préfiltre (12) dépasse la limite de temps de fonctionnement du préfiltre (12).

**8.** Ensemble selon la revendication 7, dans lequel les moyens de commande (17) sont configurés pour détecter le préfiltre (12) par une opération de réinitialisation d'un interrupteur de pré-réinitialisation qui est adapté, quand le mode d'entraînement est modifié pour passer à un mode de réinitialisation, pour réinitialiser le temps de fonctionnement cumulé du préfiltre (12) détecté par les moyens de détection du temps de fonctionnement cumulé du préfiltre (12).

**9.** Ensemble selon la revendication 8, dans lequel les moyens de commande (17) comprennent des moyens de mémoire non volatile pour mémoriser un drapeau d'état de préfiltre (12) dont les valeurs booléennes indiquent si un remplacement du préfiltre (12) est nécessaire, dans lequel les moyens de commande (17) sont en outre configurés pour régler le drapeau d'état du préfiltre (12) mémorisé dans les moyens de mémoire sur la valeur « BESOIN DE REMPLACEMENT » en cas de détection de survenues soit d'un colmatage soit de la fin de la vie utile du préfiltre (12), et les moyens de commande (17) sont en outre configurés pour régler le drapeau d'état du préfiltre (12) sur la valeur «PAS DE BESOIN DE REMPLACEMENT » quand l'interrupteur de pré-réinitialisation est actionné.

**10.** Ensemble selon l'une quelconque des revendications 1 à 9, comprenant en outre :

des moyens pour détecter le filtre principal (14) logé dans le carter (11) ; et
des moyens pour mémoriser un limite de temps de fonctionnement du filtre principal (14) correspondant aux survenues de la fin de la vie utile du filtre principal (14),
dans lequel les moyens de commande (17) sont en outre configurés pour détecter un temps de fonctionnement cumulé du filtre principal (14) afin de juger si le filtre principal (14) est détérioré, et pour commander les moyens d'affichage pour qu'ils indiquent que le filtre principal (14) doit être remplacé quand les moyens de commande (17) déterminent que la fin de la vie du filtre principal (14) est détectée lorsque le temps de fonctionnement cumulé du filtre principal (14) dépasse la limite de temps de fonctionnement du filtre principal (14).

**11.** Ensemble selon la revendication 10, dans lequel les moyens de détection du filtre principal (14) sont un interrupteur de réinitialisation (32) du filtre principal configuré pour réinitialiser le temps de fonctionnement cumulé du filtre principal quand le filtre principal est remplacé.

**12.** Ensemble selon la revendication 11, dans lequel, quand l'interrupteur de réinitialisation (32) du filtre principal est actionné, les moyens de commande (17) commandent les moyens d'affichage pour qu'ils indiquent que le filtre principal (14) n'a pas besoin d'être remplacé.

**13.** Ensemble selon la revendication 12, dans lequel les moyens de commande (17) comprennent des moyens de mémoire non volatile pour mémoriser un drapeau d'état du filtre principal (14) dont les valeurs booléennes indiquent si un remplacement du filtre principal (14) est nécessaire,
dans lequel les moyens de commande (17) sont en outre configurés pour régler le drapeau d'état du filtre principal (14) à la valeur « BESOIN DE REMPLACEMENT » en cas de détection de survenues de la fin de la vie utile du filtre principal (14), et les moyens de commande (17) sont en outre configurés pour régler le drapeau d'état du filtre principal (14) sur la valeur « PAS DE BESOIN DE REMPLACEMENT » quand l'interrupteur de réinitialisation (32) du filtre principal est actionné, et les moyens d'affichage sont configurés pour indiquer que le filtre principal (14) doit être remplacé quand la valeur du drapeau d'état du filtre principal (14) est réglée sur « BESOIN DE REMPLACEMENT », et les moyens d'affichage sont configurés pour indiquer que le filtre principal (14) n'a pas besoin d'être remplacé quand la valeur du drapeau d'état du filtre principal (14) est réglée sur « PAS DE BESOIN DE REMPLACEMENT ».

**14.** Ensemble selon l'une quelconque des revendications 1 à 13,
dans lequel le préfiltre (12) est d'un type à absorption,
le filtre principal (14), disposé sur le côté aval par rapport au préfiltre (12), est d'un type à absorption ayant une capacité d'absorption plus élevée et une vie utile plus longue que le préfiltre (12).

**15.** Procédé effectué par des moyens de commande (17) d'un ensemble de purificateur d'air ayant

- un carter,
- un ventilateur (16) logé dans le carter (11) et configuré pour aspirer de l'air dans le carter (11),
- un préfiltre (12) disposé dans un passage d'air du carter (11),
- un filtre principal (14) dans le passage d'air et disposé entre le préfiltre (12) et le ventilateur (16), et
- des moyens d'affichage raccordés de façon opérationnelle auxdits moyens de commande (17) de façon à indiquer des avertissements de remplacement de chaque filtre individuellement,

**caractérisé par**

-- une étape de comptage d'un nombre (« N ») de fois qu'un colmatage du préfiltre (12) a été détecté ;
-- une étape de comptage d'un nombre (« M ») de fois que la fin de vie utile du préfiltre (12) a été détectée ;
-- une étape de calcul d'une valeur de comptage (« Z ») selon la formule suivante :

$$Z= N+CxM \quad (1)$$

où (« C ») est un facteur de correction, et
-- une étape de commande des moyens d'affichage pour qu'ils indiquent que le filtre principal (14) doit être remplacé quand la valeur de comptage (« Z ») dépasse une limite de filtre principal (14).

**16.** Procédé selon la revendication 15, dans lequel l'étape de comptage de (« N ») inclut une étape de détection d'une vitesse du moteur (« S ») pour entraîner le ventilateur (16), et une étape de détermination du colmatage du préfiltre (12) est survenu quand la vitesse du moteur (« S ») détectée dépasse une limite de rotation prédéterminée.

**17.** Procédé selon la revendication 15 ou 16, dans lequel l'étape de comptage du (« M ») inclut une étape de détection d'un temps de fonctionnement cumulé du préfiltre (12) pendant lequel le même préfiltre (12) a été utilisé à l'intérieur du carter (11) avec le ventilateur (16) en marche, et une étape de détermination des survenues de la fin de la vie utile du préfiltre (12) quand le temps de fonctionnement cumulé du préfiltre (12) dépasse une limite de temps de fonctionnement prédéterminée.

**18.** Procédé selon l'une quelconque des revendications 15 à 17, comprenant en outre une étape de saut d'un fusible (90) sur le filtre principal (14) quand la valeur de comptage (« Z ») (=N+CxM) dépasse la limite du filtre principal (14).

**19.** Procédé selon l'une quelconque des revendications 15 à 18, comprenant en outre une étape de commande des moyens d'affichage pour qu'ils indiquent que le filtre principal (14) doit être remplacé quand un temps de fonctionnement cumulé du filtre principal (14) pendant lequel le même filtre principal (14) a été utilisé à l'intérieur du carter (11) avec le ventilateur (16) en marche dépasse une limite de temps de fonctionnement du filtre principal (14).

FIG.1

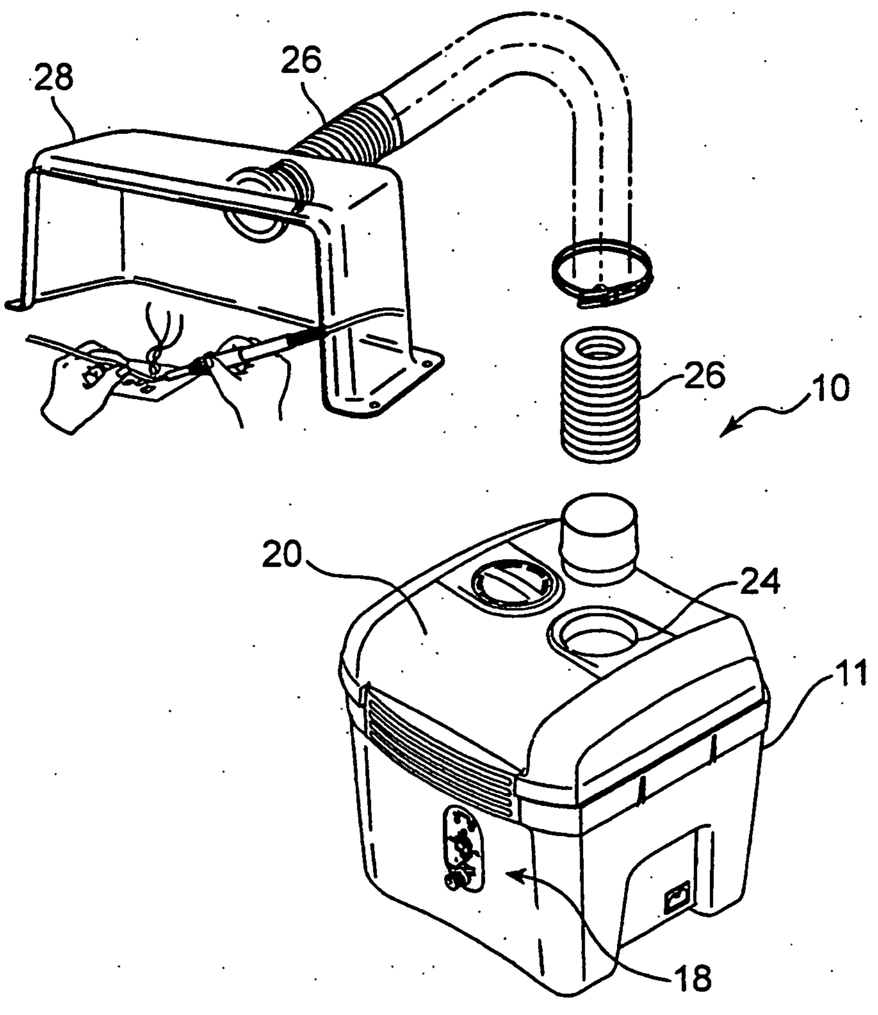

FIG.2

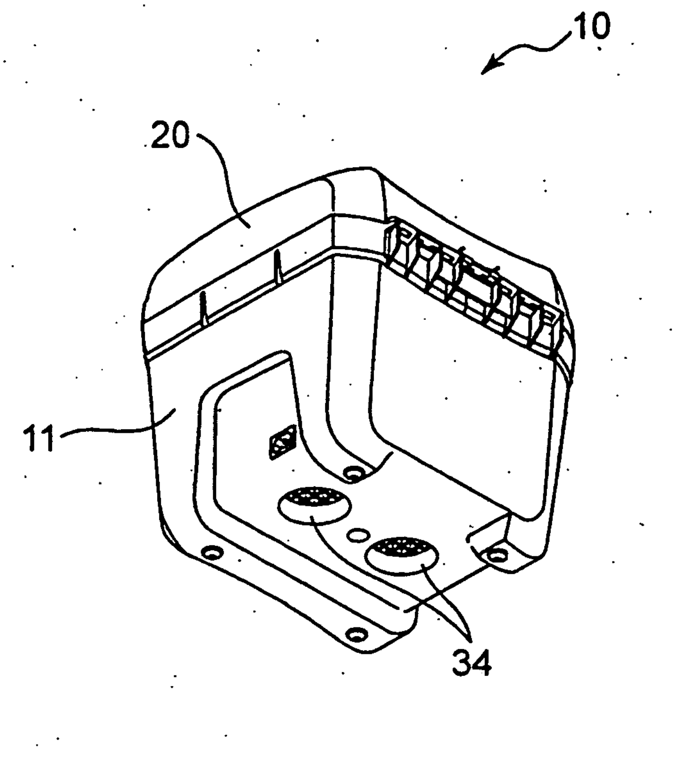

FIG.3

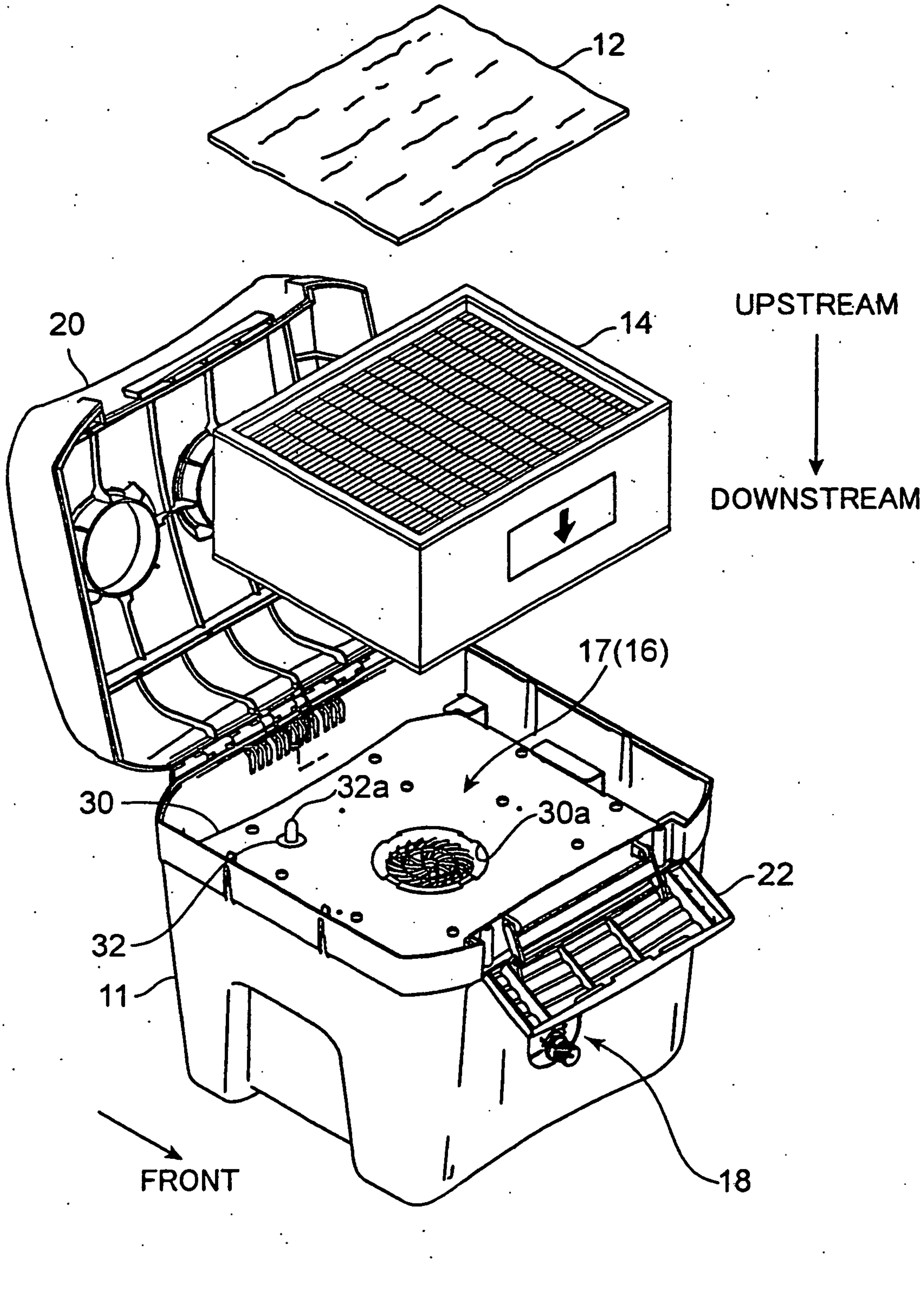

FIG.4

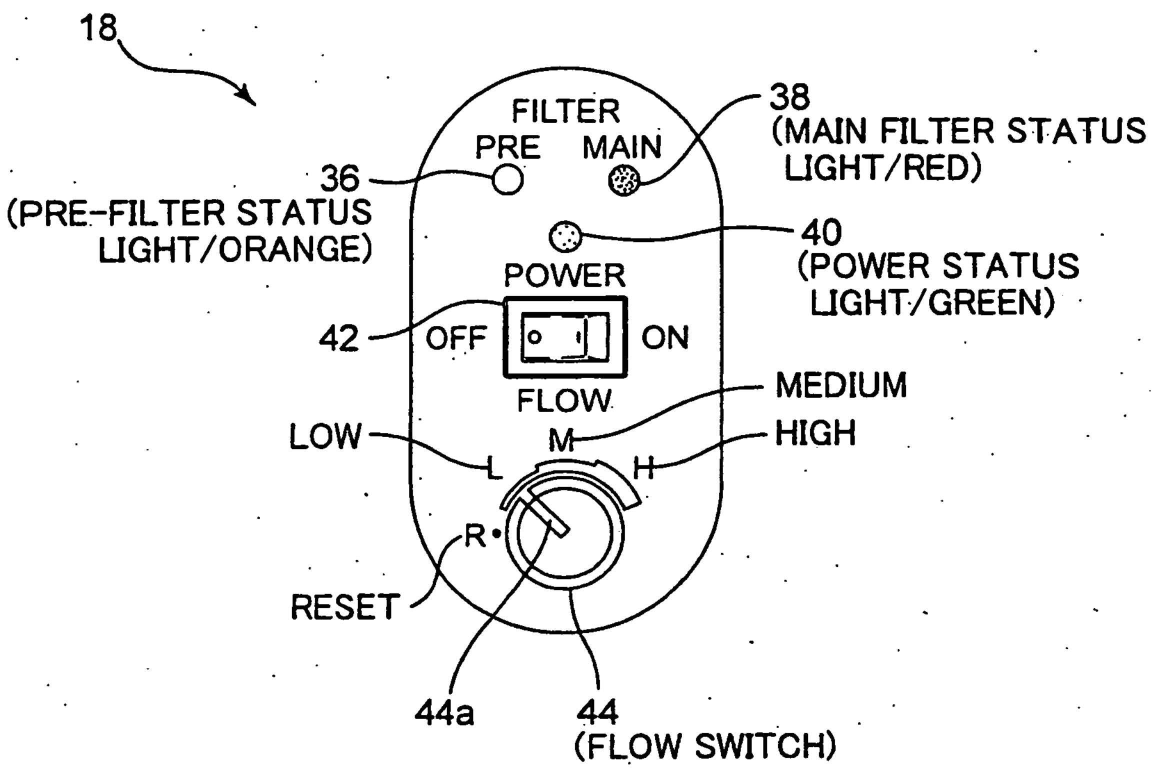
18
FILTER
PRE
MAIN
36
(PRE-FILTER STATUS LIGHT/ORANGE)
38
(MAIN FILTER STATUS LIGHT/RED)
40
(POWER STATUS LIGHT/GREEN)
POWER
42
OFF
ON
FLOW
MEDIUM
LOW
HIGH
M
L
H
R
RESET
44a
44
(FLOW SWITCH)

FIG.5

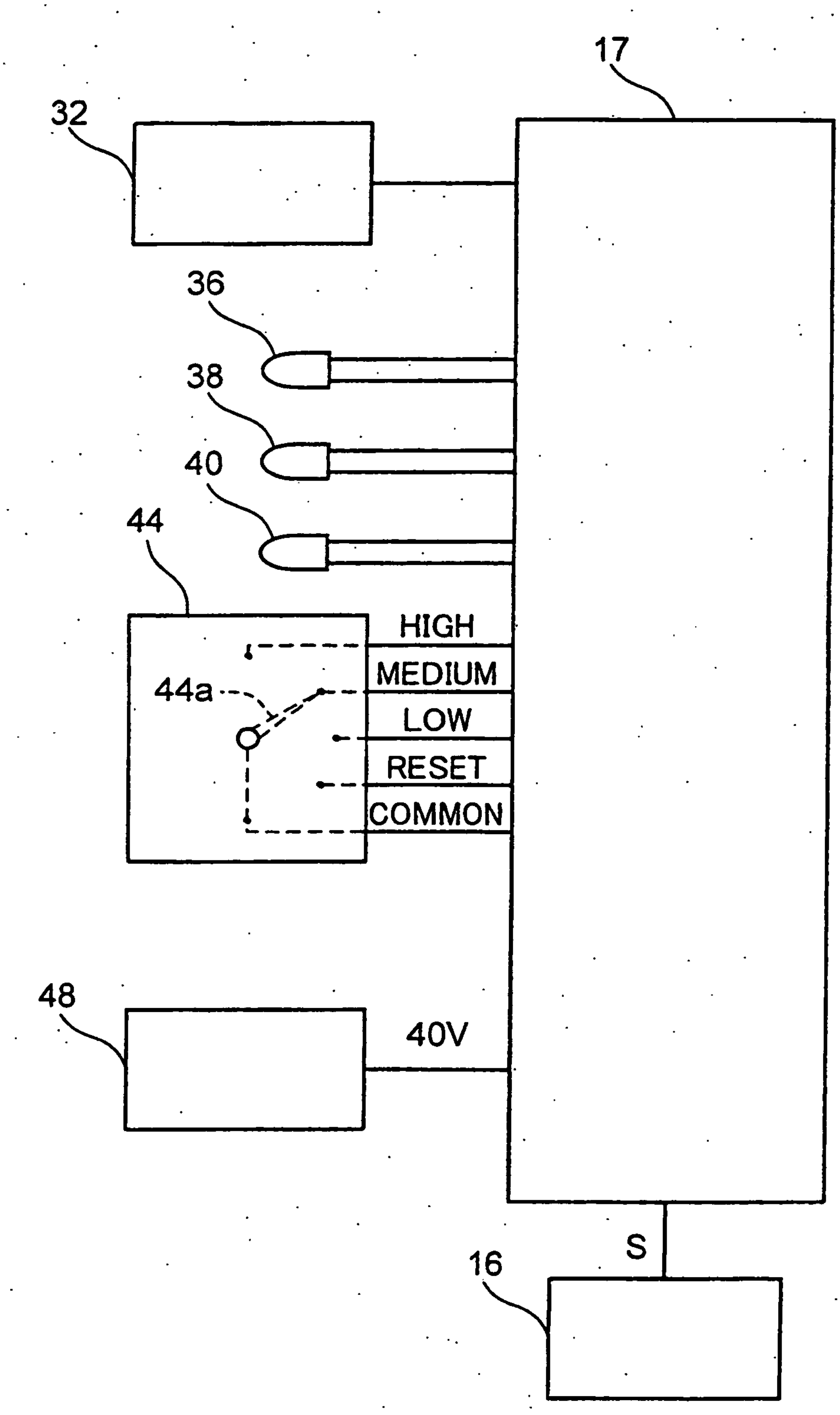

FIG.6

【LEGEND】

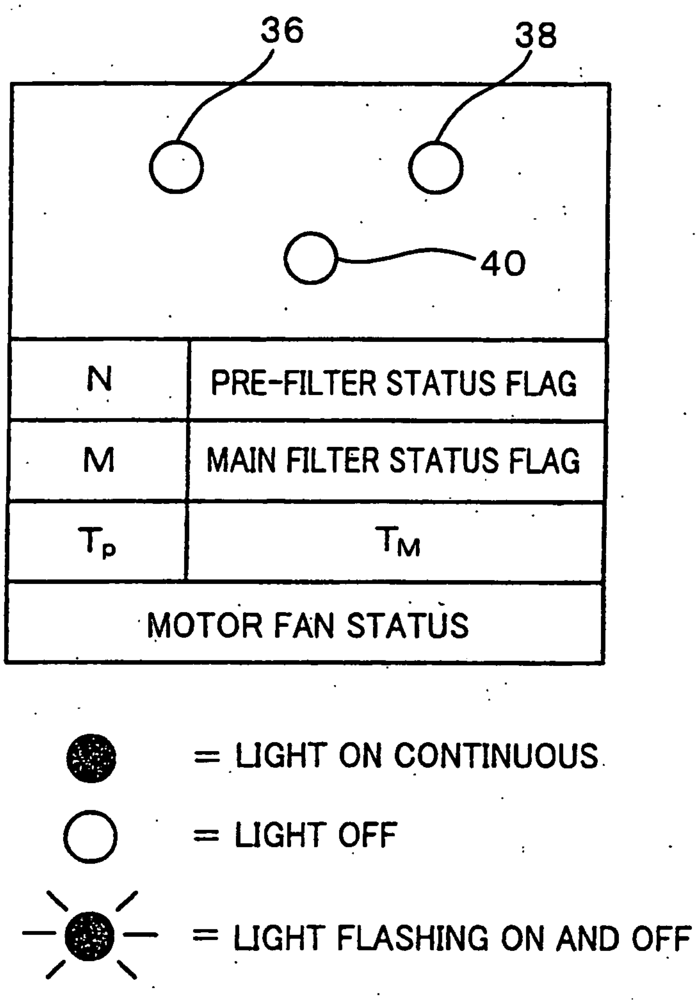


N: NUMBER OF TIMES DETECTING CLOGGING OF PRE-FILTER

M: NUMBER OF TIMES DETECTING END OF USEFUL LIFE OF PRE-FILTER

$T_p$ : PRE-FILTER CUMULATIVE OPERATING TIME

$T_M$ : MAIN FILTER CUMULATIVE OPERATING TIME

FIG.7

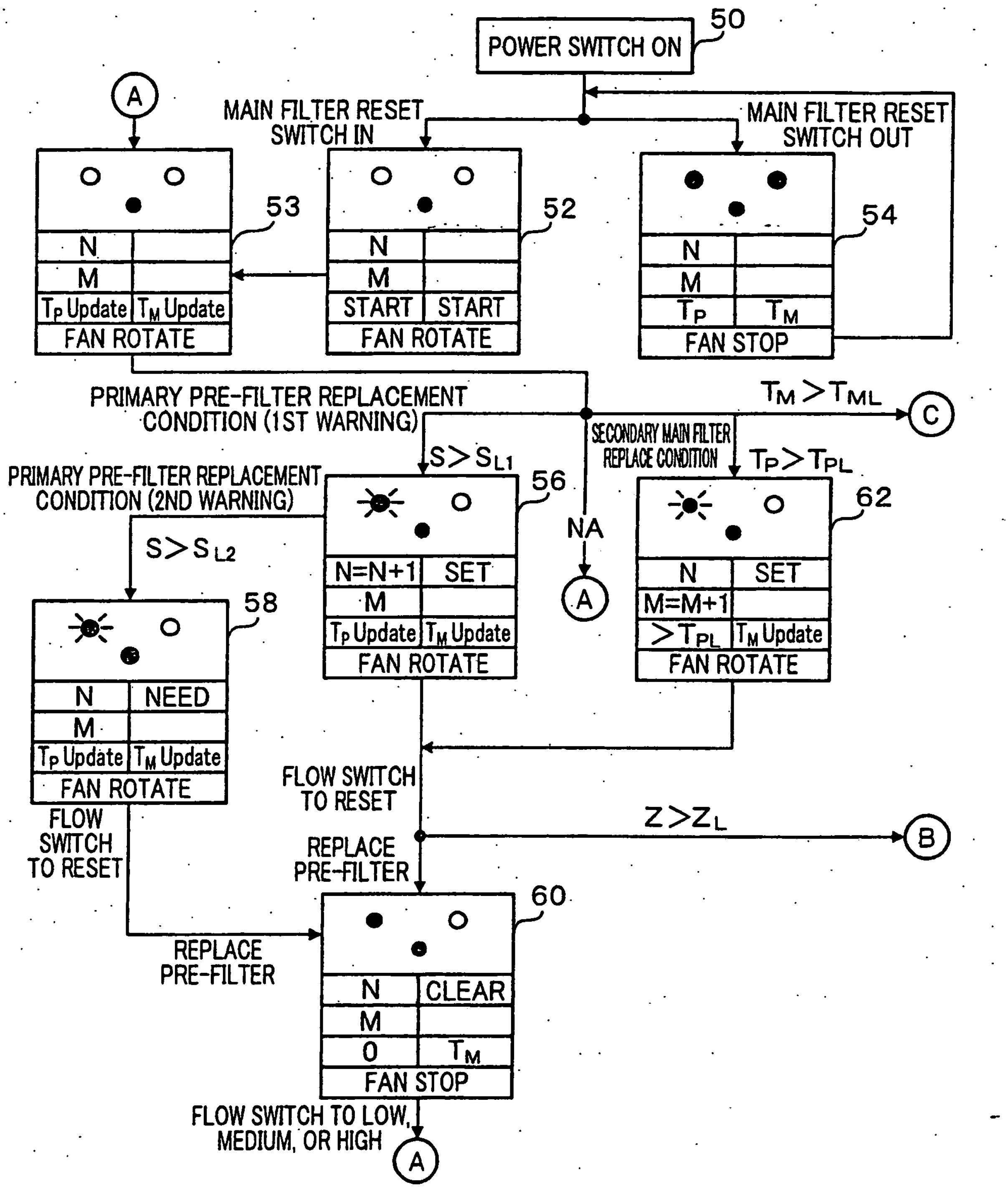

POWER SWITCH ON
50
MAIN FILTER RESET SWITCH IN
MAIN FILTER RESET SWITCH OUT
A
53
52
54
N
M
$T_P$ Update
$T_M$ Update
START
START
FAN ROTATE
$T_P$
$T_M$
FAN STOP
PRIMARY PRE-FILTER REPLACEMENT CONDITION (1ST WARNING)
$T_M > T_{ML}$
C
SECONDARY MAIN FILTER REPLACE CONDITION
$S > S_{L1}$
$T_P > T_{PL}$
PRIMARY PRE-FILTER REPLACEMENT CONDITION (2ND WARNING)
56
62
NA
$S > S_{L2}$
N=N+1
SET
M=M+1
$> T_{PL}$
58
NEED
FLOW SWITCH TO RESET
$Z > Z_L$
B
REPLACE PRE-FILTER
60
CLEAR
0
FLOW SWITCH TO LOW, MEDIUM, OR HIGH

FIG.8

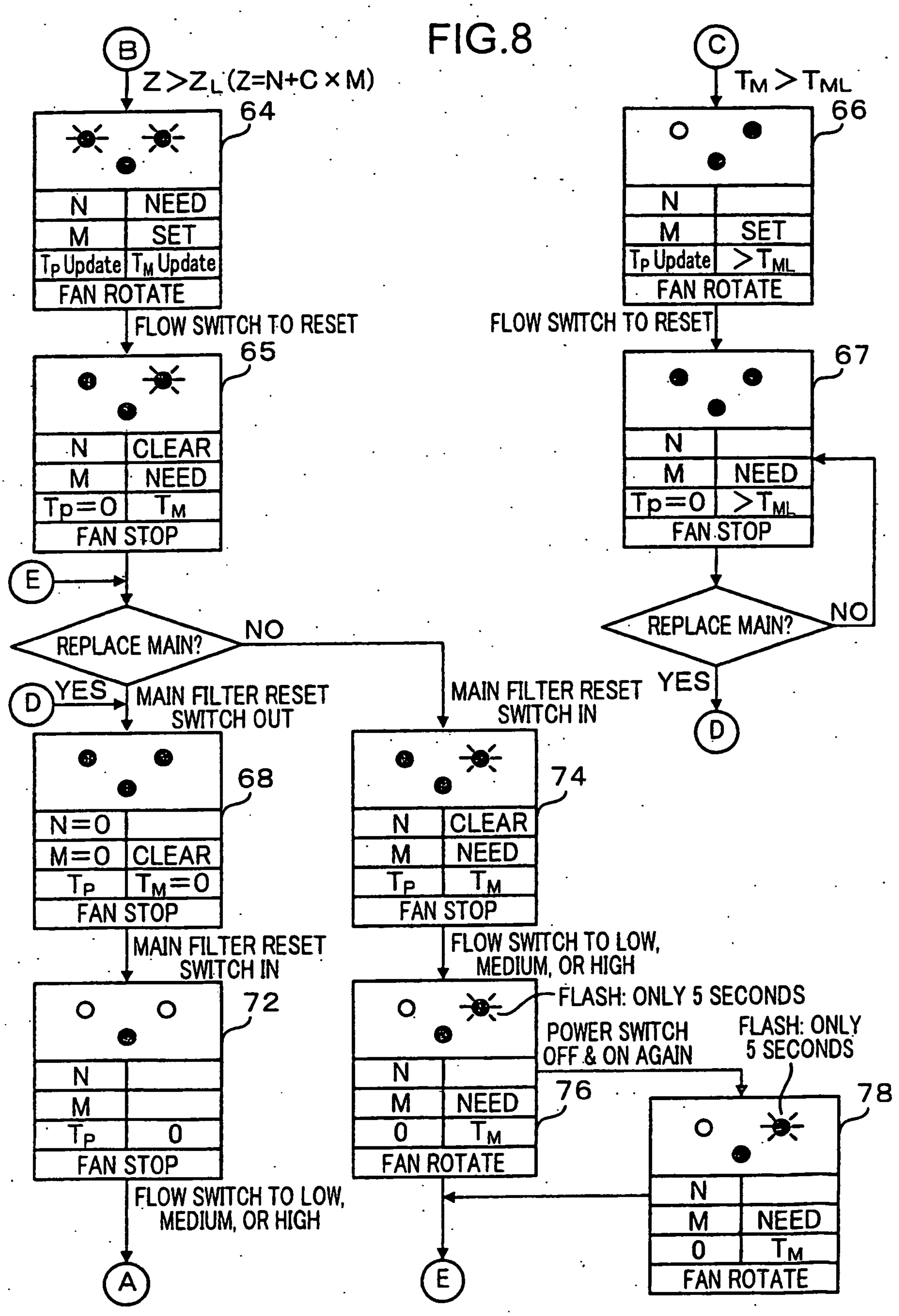

B
Z>ZL (Z=N+C×M)
64
N NEED
M SET
TP Update TM Update
FAN ROTATE
FLOW SWITCH TO RESET
65
N CLEAR
M NEED
Tp=0 TM
FAN STOP
E
REPLACE MAIN?
NO
YES
D
MAIN FILTER RESET SWITCH OUT
68
N=0
M=0 CLEAR
TP TM=0
FAN STOP
MAIN FILTER RESET SWITCH IN
72
N
M
TP 0
FAN STOP
FLOW SWITCH TO LOW, MEDIUM, OR HIGH
A
MAIN FILTER RESET SWITCH IN
74
N CLEAR
M NEED
TP TM
FAN STOP
FLOW SWITCH TO LOW, MEDIUM, OR HIGH
FLASH: ONLY 5 SECONDS
POWER SWITCH OFF & ON AGAIN
FLASH: ONLY 5 SECONDS
76
N
M NEED
0 TM
FAN ROTATE
E
78
N
M NEED
0 TM
FAN ROTATE
C
TM>TML
66
N
M SET
TP Update >TML
FAN ROTATE
FLOW SWITCH TO RESET
67
N
M NEED
Tp=0 >TML
FAN STOP
REPLACE MAIN?
NO
YES
D

FIG.9

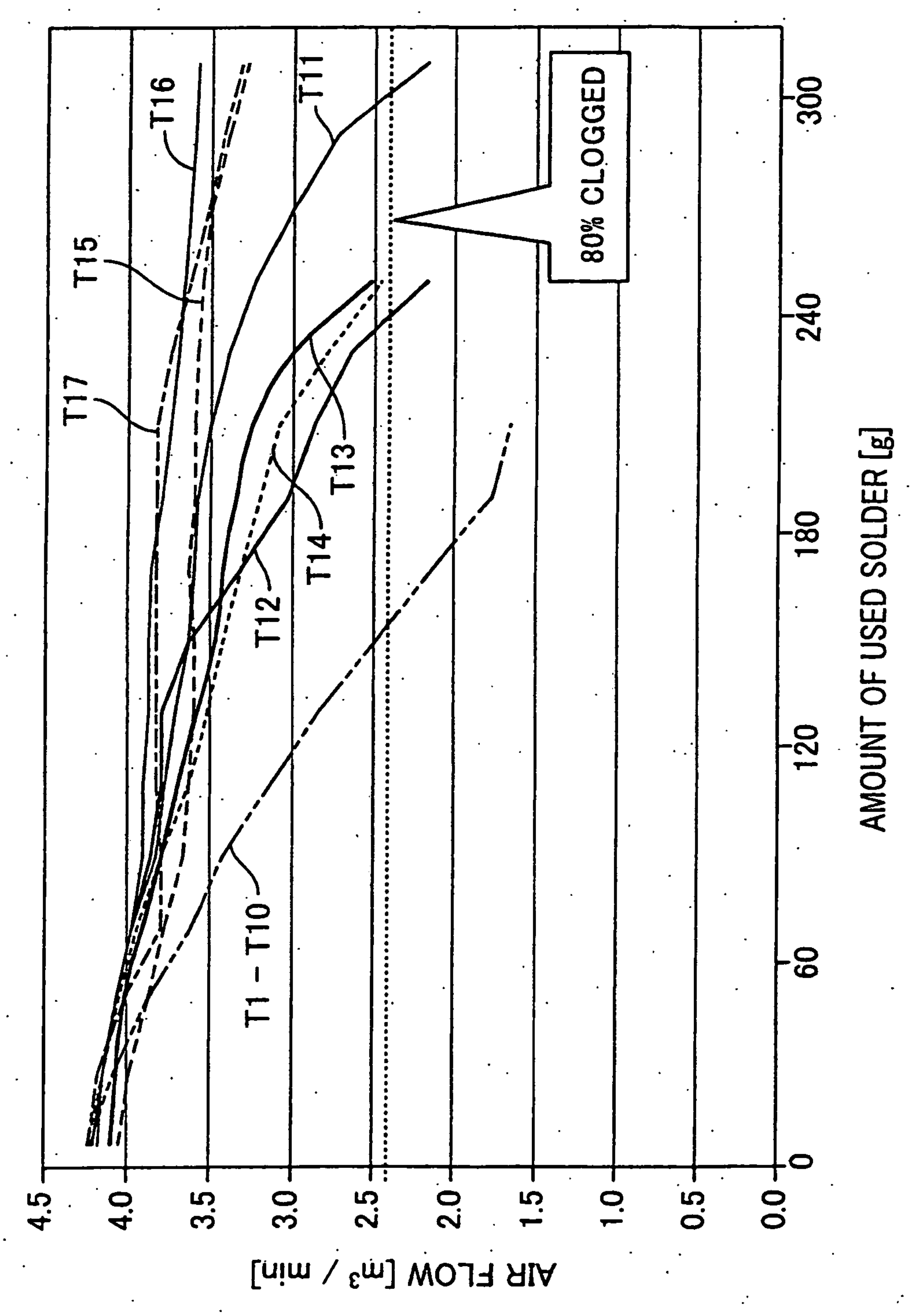
T16
T15
T17
T11
80% CLOGGED
T13
T14
T12
T1 - T10
AIR FLOW [m³ / min]
4.5
4.0
3.5
3.0
2.5
2.0
1.5
1.0
0.5
0.0
0
60
120
180
240
300
AMOUNT OF USED SOLDER [g]

FIG.10

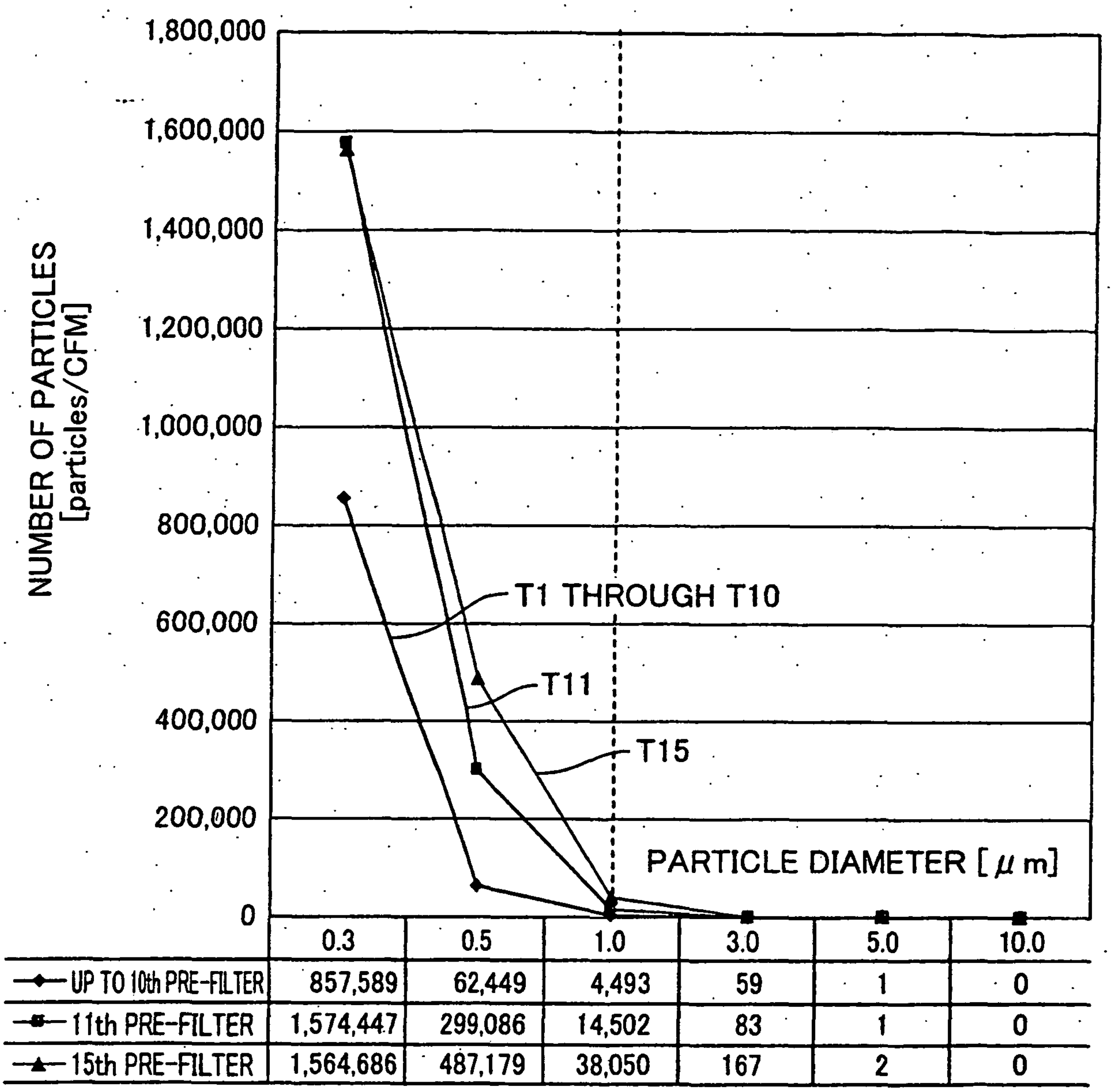


| | 0.3 | 0.5 | 1.0 | 3.0 | 5.0 | 10.0 |
|---|---|---|---|---|---|---|
| —◆— UP TO 10th PRE-FILTER | 857,589 | 62,449 | 4,493 | 59 | 1 | 0 |
| —■— 11th PRE-FILTER | 1,574,447 | 299,086 | 14,502 | 83 | 1 | 0 |
| —▲— 15th PRE-FILTER | 1,564,686 | 487,179 | 38,050 | 167 | 2 | 0 |

FIG.11

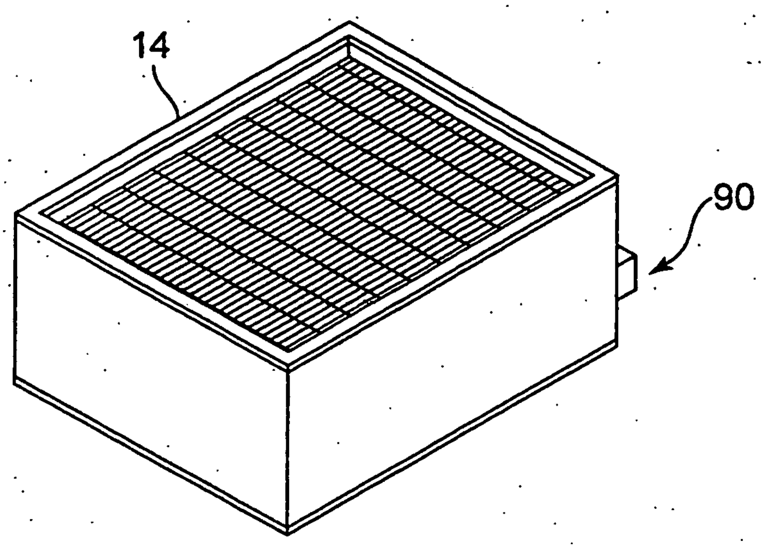

FIG.12

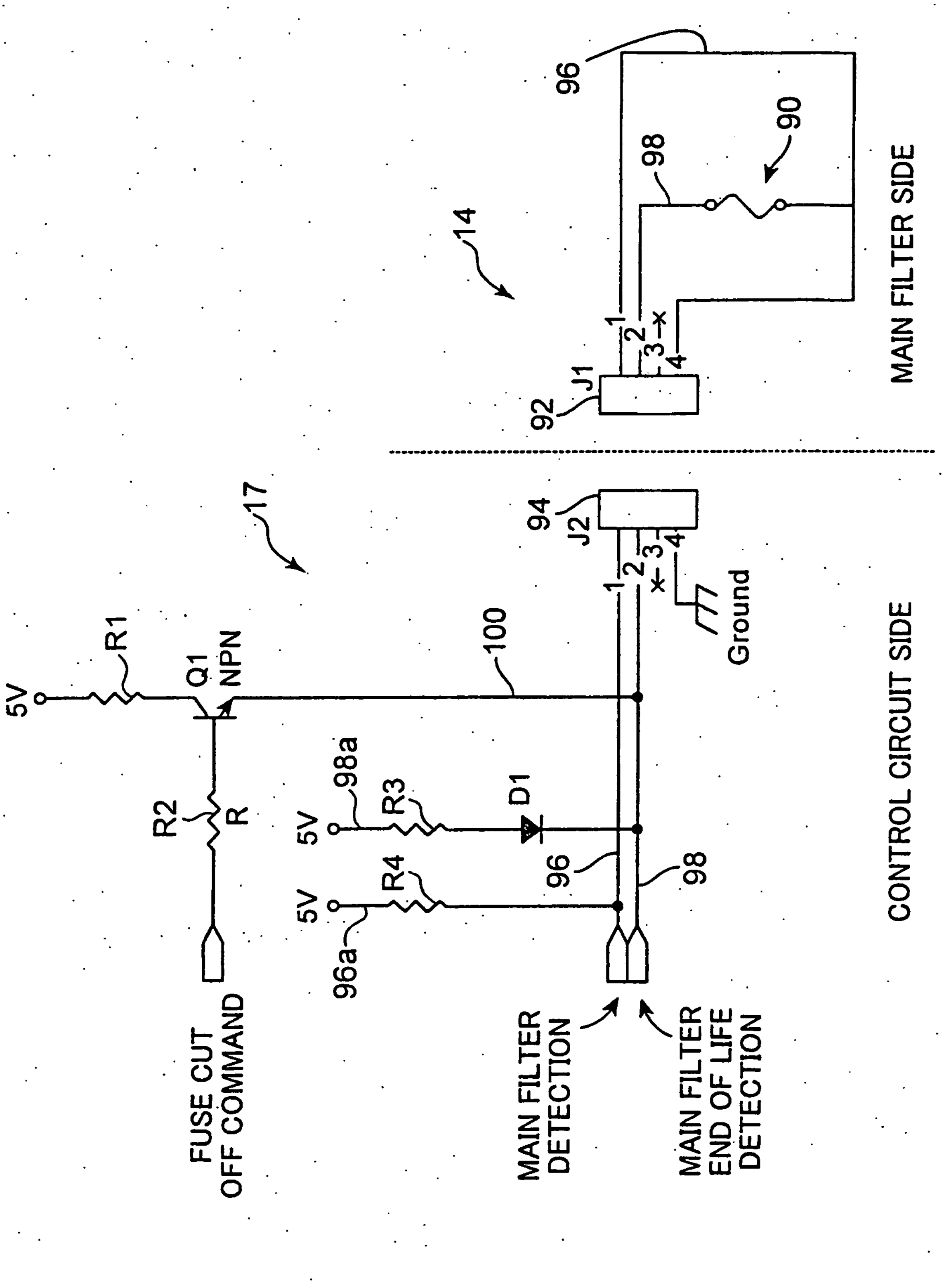

FUSE CUT OFF COMMAND
5V
R1
Q1 NPN
R2
R
5V
98a
R3
D1
5V
R4
96a
96
98
100
17
J2
94
1
2
3
4
Ground
MAIN FILTER DETECTION
MAIN FILTER END OF LIFE DETECTION
CONTROL CIRCUIT SIDE
14
92
J1
1
2
3
4
98
90
96
MAIN FILTER SIDE

FIG.13

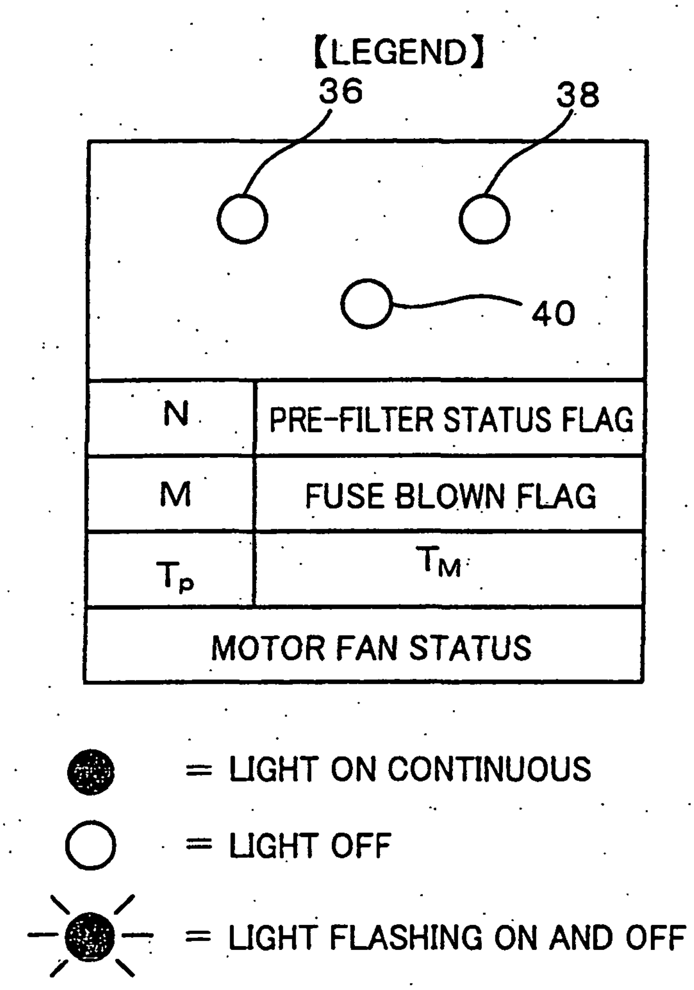


N: NUMBER OF TIMES DETECTING CLOGGING OF PRE-FILTER

M: NUMBER OF TIMES DETECTING END OF USEFUL LIFE OF PRE-FILTER

$T_p$ : PRE-FILTER CUMULATIVE OPERATING TIME

$T_M$ : MAIN FILTER CUMULATIVE OPERATING TIME

FIG.14

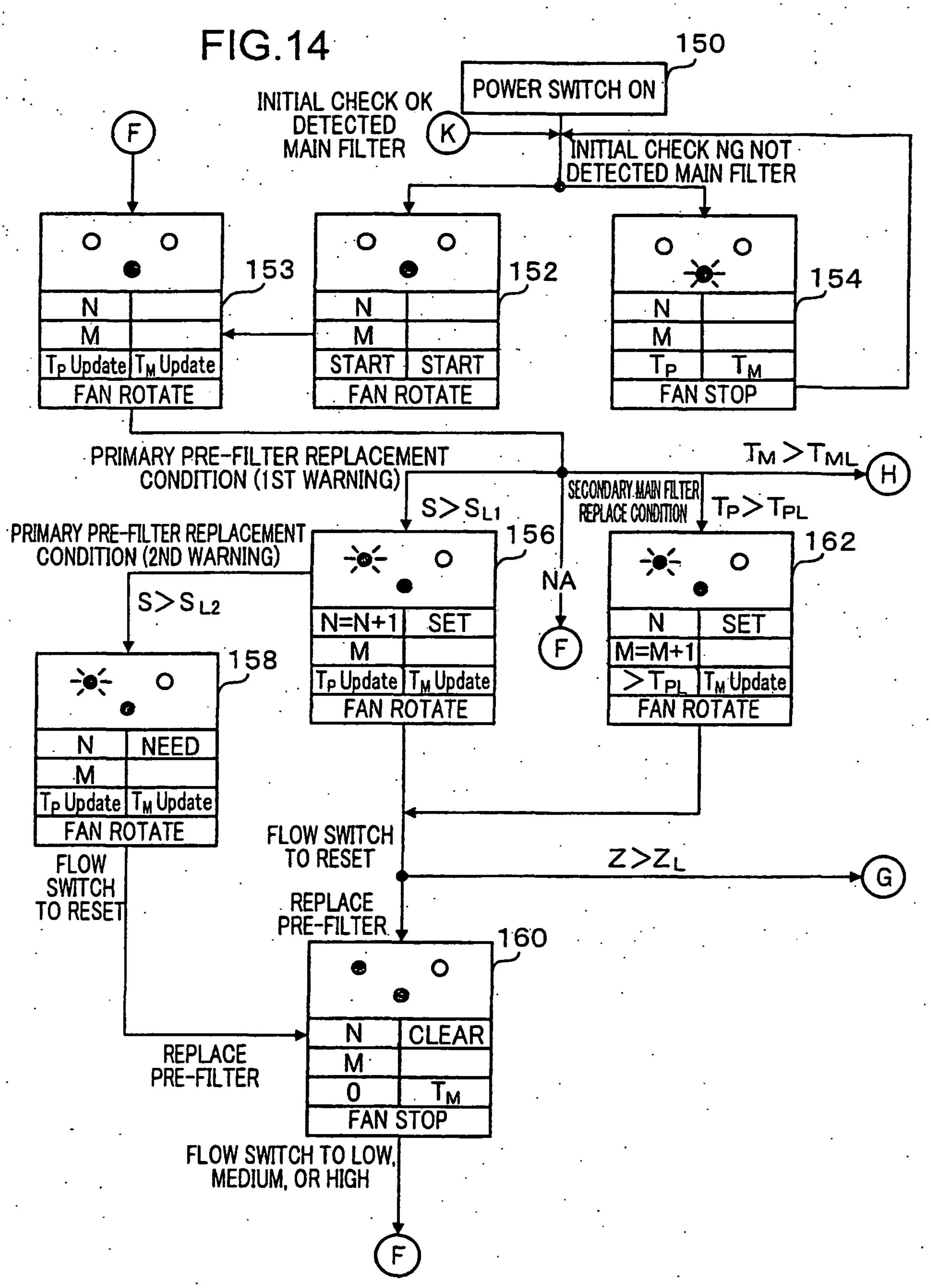

150
POWER SWITCH ON
INITIAL CHECK OK DETECTED MAIN FILTER
K
INITIAL CHECK NG NOT DETECTED MAIN FILTER
F
153
N
M
TP Update
TM Update
FAN ROTATE
152
N
M
START
START
FAN ROTATE
154
N
M
TP
TM
FAN STOP
PRIMARY PRE-FILTER REPLACEMENT CONDITION (1ST WARNING)
TM>TML
H
SECONDARY MAIN FILTER REPLACE CONDITION
S>SL1
TP>TPL
PRIMARY PRE-FILTER REPLACEMENT CONDITION (2ND WARNING)
156
NA
162
S>SL2
N=N+1
SET
M
TP Update
TM Update
FAN ROTATE
F
N
SET
M=M+1
>TPL
TM Update
FAN ROTATE
158
N
NEED
M
TP Update
TM Update
FAN ROTATE
FLOW SWITCH TO RESET
FLOW SWITCH TO RESET
Z>ZL
G
REPLACE PRE-FILTER
160
N
CLEAR
M
0
TM
FAN STOP
REPLACE PRE-FILTER
FLOW SWITCH TO LOW, MEDIUM, OR HIGH
F

FIG.15

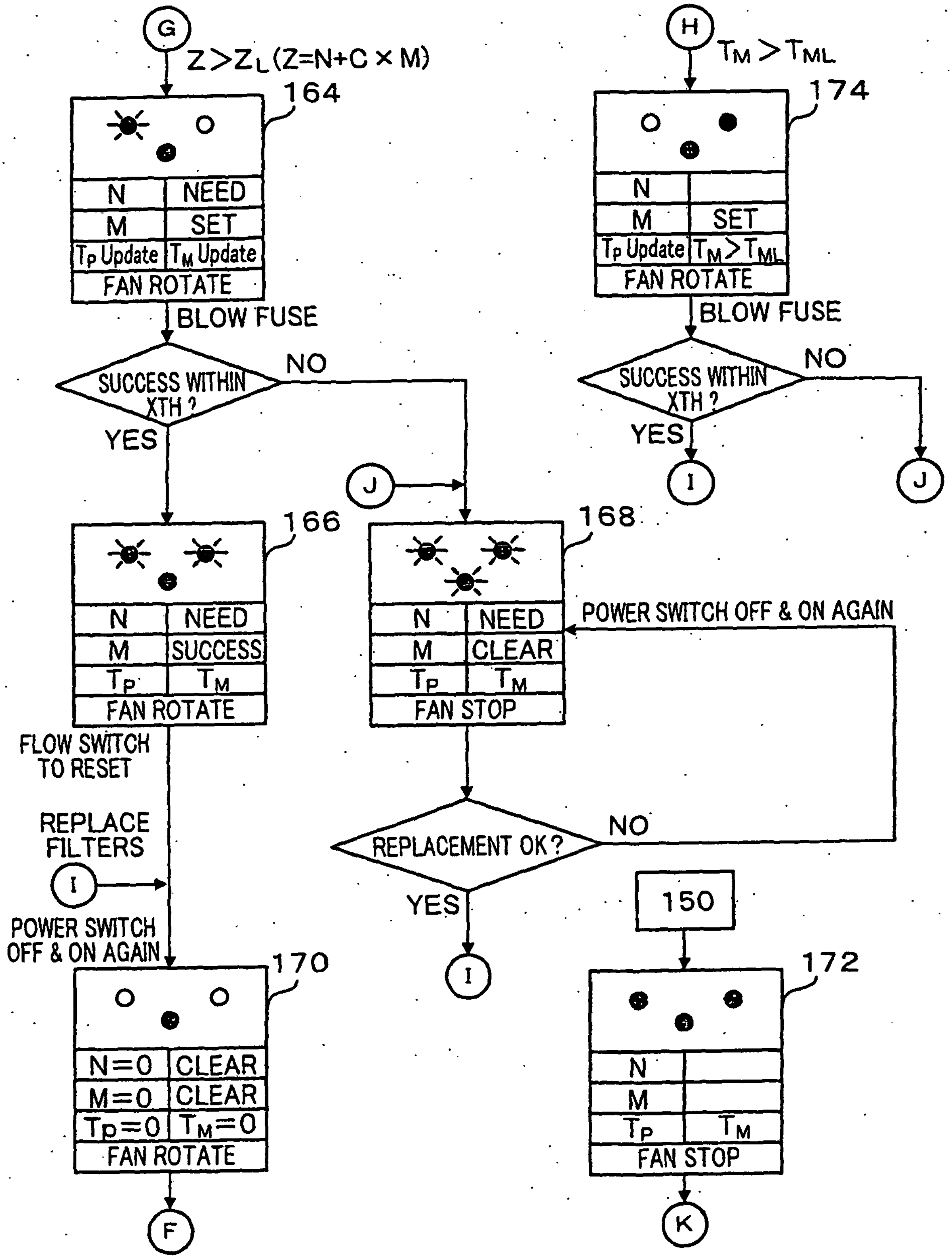
G
Z>ZL (Z=N+C × M)
164
N NEED
M SET
TP Update TM Update
FAN ROTATE
BLOW FUSE
SUCCESS WITHIN XTH ?
NO
YES
H
TM > TML
174
N
M SET
TP Update TM > TML
FAN ROTATE
BLOW FUSE
SUCCESS WITHIN XTH ?
NO
YES
I
J
J
166
N NEED
M SUCCESS
TP TM
FAN ROTATE
168
N NEED
M CLEAR
TP TM
FAN STOP
POWER SWITCH OFF & ON AGAIN
FLOW SWITCH TO RESET
REPLACE FILTERS
I
POWER SWITCH OFF & ON AGAIN
REPLACEMENT OK ?
NO
YES
I
150
170
N=0 CLEAR
M=0 CLEAR
TP=0 TM=0
FAN ROTATE
F
172
N
M
TP TM
FAN STOP
K

FIG.16

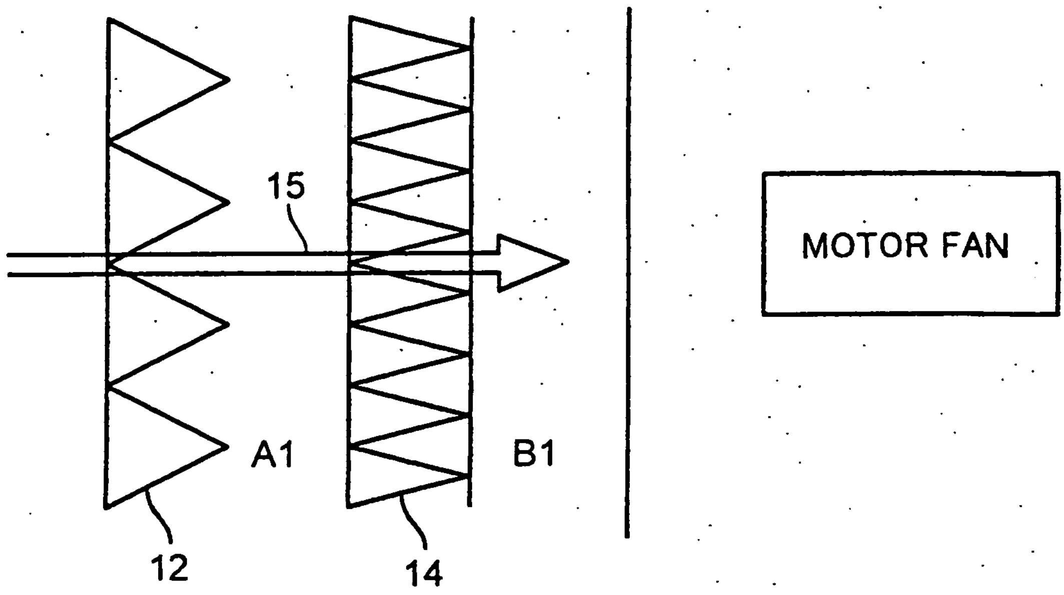

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2755200 B
- US 6036757 A
- US 20070277672 A1
- US 20070012181 A1
- WO 0226349 A1
- WO 9747928 A2